# EUROPEAN PATENT APPLICATION

(11) **EP 3 919 313 A1**
(43) Date of publication of application: **08.12.2021**
(21) Application number: 21180403.4
(22) Date of filing: 20.09.2019
(51) Int. Cl.: B60L 50/60, B60L 50/64, H01M 50/224, H01M 50/229, H01M 50/231, H01M 50/249, H01M 10/613, H01M 10/625, H01M 10/6556, H01M 10/6567

(54) **LOWER PROTECTING PLATE OF BATTERY MODULE FOR ELECTRIC CAR**

(30) Priority: 20.09.2018 KR 20180112780; 20.09.2018 KR 20180112781; 21.09.2018 KR 20180113401; 28.06.2019 KR 20190077888; 31.07.2019 KR 20190093142; 31.07.2019 KR 20190093143
(62) Divisional of application: 19861537.9
(71) Applicant: LG Hausys, Ltd., Seoul 04637 (KR)
(72) Inventor: Kim, Do-Hyoung, 07796 Seoul (KR); Choi, Hyun-Jin, 07796 Seoul (KR); Kim, Kwon-Taek, 07796 Seoul (KR); Oh, Ae-Ri, 07796 Seoul (KR); Jung, Chan-Ho, 07796 Seoul (KR); Seo, Ha-Jeong, 07796 Seoul (KR); Lee, Eun-Guk, 07796 Seoul (KR); Kim, Hee-June, 07796 Seoul (KR)
(74) Representative: Petraz, Gilberto Luigi

(57) **Abstract**

Provided is a lower protecting plate of a battery module for an electric car. The lower protecting plate may include a fiber-reinforced plastic composite formed of a lamination sheet including at least one of first and second sheets. The first sheet may include matrix resin and reinforced fiber in the form of long fiber. The second sheet may include matrix resin and reinforced fiber in the form of fabric woven by continuous fiber.

## Description

### Field of the disclosure

The present disclosure relates to a lower protecting plate of a battery module for an electric car.

### Related Art

Recently, as environmental issues become important, automobile industry undergoes substantial changes. Globally, the fuel efficiency regulation of vehicles becomes stricter. In order to cope with the stricter regulation, automobile makers are developing the technology for reducing the weight of components of a hybrid car, an electric car, and a vehicle. This technology is practically commercialized.

In particular, as for the technical development for reducing the weight of electric-car components, a change in material for a battery case which supports an electric-car battery is required. In order to enhance productivity and durability, a change in coupling structure between respective components is required.

That is, a conventional battery case is problematic in that it is made of metal, so that the weight of a vehicle body is increased. Furthermore, when the battery case is made of an aluminum material so as to reduce the weight of the vehicle body, cost is undesirably increased because a process of assembling the components constituting the battery case adopts a welding process or the like.

### SUMMARY

The present disclosure provides a lower protecting plate of a battery module for an electric car, which is capable of reducing an overall weight while satisfying mechanical performance.

The present disclosure also provides a lower protecting plate of a battery module for an electric car, in which water-tightness between an interior and an exterior of a battery case is excellent when the battery module is mounted.

The present disclosure also provides a lower protecting plate of a battery module for an electric car, in which a reduction in weight is realized, a battery case can be safely and firmly protected, and it is easy to replace some components with new ones in the event of damage.

The present disclosure also provides a lower protecting plate of a battery module for an electric car, in which a support layer of a battery case is formed by integrally injection molding two types of fiber-reinforced plastic composites, and a fastening member is subjected to injection molding together with the support layer to couple the fastening member to the support layer, so that robustness and productivity are enhanced.

In an aspect, a lower protecting plate of a battery module for an electric car may include a fiber-reinforced plastic composite formed of a lamination sheet including at least one of first and second sheets, the first sheet may include matrix resin and reinforced fiber in the form of long fiber, and the second sheet may include matrix resin and reinforced fiber in the form of fabric woven by continuous fiber.

The first sheet may be composed of a plurality of sheets.

The second sheet may be composed of a plurality of sheets.

The first sheet may include 20 to 70 parts by weight of the long fiber on the basis of 100 parts by weight of the matrix resin, and a basis weight of the long fiber may range from 1500 g/m² to 3500 g/m².

The long fiber may have an average length of 10 mm to 30 mm, and the long fiber may have a section diameter of 5 *µ*m to 30 *µ*m.

The second sheet may include 20 to 70 parts by weight of the fabric woven by continuous fiber on the basis of 100 parts by weight of the matrix resin, and a basis weight of the fabric may range from 800 g/m² to 1100 g/m².

The continuous fiber may have a section diameter of 1 *µ*m to 200 *µ*m.

The lamination sheet may be provided by alternately laminating the first and second sheets.

The lamination sheet may be provided by laminating a plurality of first sheets which are continuously laminated and a plurality of second sheets which are continuously laminated.

The lamination sheet may be provided by alternately laminating a plurality of first sheets which are continuously laminated and a plurality of second sheets which are continuously laminated.

The lamination sheet may include the first and second sheets in a lay-up ratio of 1 : 10 to 10 : 1.

The second sheet may include matrix resin and fabric woven by continuous fiber as reinforced fiber, and the second sheet may include at least one 2-1 sheet and at least one 2-2 sheet having different fabric orientation angles.

A fabric of the 2-1 sheet may have an orientation in a first direction, a fabric of the 2-2 sheet may have an orientation in a second direction, and an orientation angle formed between the first direction and the second direction may be an acute angle which is more than 0 degree and less than 90 degrees.

The second sheet may be provided by alternately laminating the 2-1 sheet and the 2-2 sheet.

The second sheet may be provided by laminating a plurality of 2-1 sheets which are continuously laminated and a plurality of 2-2 sheets which are continuously laminated.

The second sheet may be provided by alternately laminating a plurality of 2-1 sheets which are continuously laminated and a plurality of 2-2 sheets which are continuously laminated.

### ADVANTAGEOUS EFFECTS

A lower protecting plate of a battery module for an electric car according to the present disclosure can reduce an overall weight while satisfying mechanical performance.

Furthermore, when a battery module is mounted, water-tightness between an interior and an exterior of a battery case is very excellent.

Furthermore, a cooling path is formed, so that a weight can be reduced while heat conductivity is secured.

Furthermore, productivity can be enhanced through a convenient coupling structure between respective components.

Furthermore, durability is secured through a robust assembly structure, and the stability of the battery module can be maintained even if external force is applied due to a multilayered structure.

Furthermore, a battery case can be safely and firmly protected, and it is easy to replace some components with new ones in the event of damage.

Moreover, a support layer of a battery case is formed by integrally injection molding two types of fiber-reinforced plastic composites, and a fastening member is subjected to injection molding together with the support layer to couple the fastening member to the support layer, so that robustness and productivity can be enhanced.

### BRIEF DESCRIPTION OF THE DRAWINGS

FIG. 1 is a perspective view showing a battery case in accordance with an embodiment of the present disclosure.
FIG. 2 is an exploded perspective view of the battery case shown in FIG. 1, in which neither a cooling path nor a heat dissipation plate is present in a cooling block.
FIG. 3 is an exploded perspective view of the battery case shown in FIG. 1, in which the cooling path is not present and the heat dissipation plate is present in the cooling block.
FIG. 4 is an exploded perspective view of the battery case shown in FIG. 1, in which both the cooling path and the heat dissipation plate are present in the cooling block.
FIG. 5 is an exploded perspective view showing an inner frame and an outer frame in the battery case of FIG. 1.
FIG. 6 is a sectional view showing a state in which an inner frame, a heat dissipation plate, and an outer frame are coupled to a portion near to a sidewall of the cooling block in the battery case for a vehicle in accordance with an embodiment of the present disclosure.
FIG. 7 is a sectional view showing a state in which the heat dissipation plate and the outer frame are coupled to an edge portion of the cooling block.
FIG. 8 is a sectional view showing a state in which the heat dissipation plate is coupled to the cooling block in which the cooling path is formed.
FIG. 9(a) is a sectional view showing a state in which first and third inner frames in an inner frame are coupled to the cooling block along with the heat dissipation plate, and FIG. 9(b) is a sectional view showing a state in which a first inner frame of another shape is coupled to the cooling block.
FIG. 10 is an exploded perspective view showing the coupling structure of the heat dissipation plate, the cooling block, and the lower protective plate of FIG. 4.
FIG. 11 illustrates a modification of the cooling block, in which the lower protective plate and the cooling block of FIG. 10 are integrally formed.
FIG. 12 illustrates another modification of the cooling block inserted into the lower protective plate.
FIG. 13 is a sectional view schematically showing the battery case in accordance with an embodiment of the present disclosure.
FIG. 14 is a schematically exploded sectional view of the battery case shown in FIG. 13.
FIG. 15 is a sectional view schematically showing the battery case in accordance with an embodiment of the present disclosure.
FIG. 16 is a schematically exploded sectional view of the battery case shown in FIG. 15.
FIG. 17 is a sectional view schematically showing the battery case in accordance with an embodiment of the present disclosure.
FIG. 18 is a sectional view schematically showing the battery case in accordance with an embodiment of the present disclosure.
FIG. 19 is a schematically exploded sectional view of the battery case shown in FIG. 18.
FIG. 20 is a sectional view schematically showing the battery case in accordance with an embodiment of the present disclosure.
FIG. 21 is a sectional view schematically showing the battery case in accordance with an embodiment of the present disclosure.
FIG. 22 is a sectional view schematically showing the battery case in accordance with an embodiment of the present disclosure.
FIG. 23 is a sectional view schematically showing the battery case in accordance with an embodiment of the present disclosure.
FIG. 24 is a sectional view schematically showing the battery case in accordance with an embodiment of the present disclosure.
FIG. 25 is a diagram schematically showing a state in which a battery module for an electric car is coupled to the battery case shown in FIG. 13.
FIG. 26 is a diagram schematically showing a state in which the battery module for the electric car is coupled to the battery case shown in FIG. 18.
FIG. 27 is a sectional view schematically showing the battery case in accordance with an embodiment of the present disclosure.
FIG. 28 is a sectional view schematically showing the battery case in accordance with an embodiment of the present disclosure.
FIG. 29 is a schematic bottom view of the battery case shown in FIG. 28.
FIG. 30 is a process diagram schematically showing a method of manufacturing a battery case in accordance with an embodiment of the present disclosure.
FIG. 31 is a diagram schematically showing a manufacturing step of a manufacturing process shown in FIG. 30.
FIG. 32 is a sectional view schematically showing a battery-case manufacturing process shown in FIG. 30.
FIG. 33 is a bottom view schematically showing another embodiment of a lower mold shown in FIG. 31.
FIG. 34 is a configuration diagram schematically showing a battery case for a vehicle in accordance with an embodiment of the present disclosure.
FIG. 35 is a sectional view showing a coupling portion between an inner frame and a cooling block of the battery case for the vehicle shown in FIG. 34.
FIG. 36 is a schematic sectional view taken along line A-A of a first inner frame of the battery case for the vehicle shown in FIG. 34.
FIG. 37 is a schematic sectional view taken along line B-B of a second inner frame of the battery case for the vehicle shown in FIG. 34.
FIG. 38 is a schematic sectional view of the first inner frame of the battery case for the vehicle in accordance with an embodiment of the present disclosure.
FIG. 39 is a schematic sectional view of the first inner frame of the battery case for the vehicle in accordance with an embodiment of the present disclosure.
FIG. 40 is a configuration diagram schematically showing a battery case for a vehicle in accordance with an embodiment of the present disclosure.
FIG. 41 is a schematic sectional view taken along line C-C of a first inner frame of the battery case for the vehicle shown in FIG. 40.
FIG. 42 is a configuration diagram schematically showing a battery case for a vehicle in accordance with an embodiment of the present disclosure.
FIG. 43 is a schematic sectional view taken along line D-D of an inner frame of the battery case for the vehicle shown in FIG. 42.
FIG. 44 is a configuration diagram schematically showing a battery case for a vehicle in accordance with an embodiment of the present disclosure.
FIG. 45 is a schematic sectional view taken along line E-E of an outer frame in the battery case for the vehicle shown in FIG. 44.
FIG. 46 is a configuration diagram schematically showing a battery case for a vehicle in accordance with an embodiment of the present disclosure.
FIG. 47 is a configuration diagram schematically showing the technical idea of a battery case package for a vehicle in accordance with the present disclosure.
FIG. 48 is a configuration diagram schematically showing a lower case and a lower protective plate, in the battery case package for the vehicle in accordance with an embodiment of the present disclosure.
FIG. 49 is a schematic sectional view taken along line F-F of the lower protective plate shown in FIG. 48.
FIG. 50 is a sectional view schematically showing an embodiment in which the lower case and the lower protective plate shown in FIG. 48 are coupled to each other.
FIG. 51 is a configuration diagram schematically showing a lower protective plate in accordance with an embodiment of the present disclosure.
FIGS. 52 and 53 are exploded perspective views showing a fiber-reinforced plastic composite including a lamination sheet.
FIG. 54 is an exploded perspective view showing a fiber-reinforced plastic composite including a plurality of sheets having different fabric orientation angles.
FIG. 55 is an exploded perspective view of a battery case according to the related art.

### DESCRIPTION OF EXEMPLARY EMBODIMENTS

Since the present disclosure may be embodied in many different forms and have various embodiments, a particular embodiment will be illustrated and described herein. However, it is to be understood that the present description is not intended to limit the present disclosure to those exemplary embodiments, and the present disclosure is intended to cover not only the exemplary embodiments, but also various alternatives, modifications, equivalents and other embodiments that fall within the spirit and scope of the present disclosure.

The terminology used herein is for the purpose of describing particular embodiments only and is not intended to be limiting. In the present disclosure, the singular forms are intended to include the plural forms as well, unless the context clearly indicates otherwise. It will be further understood that the terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof.

Hereinafter, the present disclosure will be explained in detail by describing exemplary embodiments of the present disclosure with reference to the accompanying drawings. The same reference numerals are used throughout the drawings to designate the same or similar components. A detailed description of the known function and configuration which may make the gist of the present disclosure obscure will be omitted. Likewise, some components may be exaggerated, omitted or schematically illustrated.

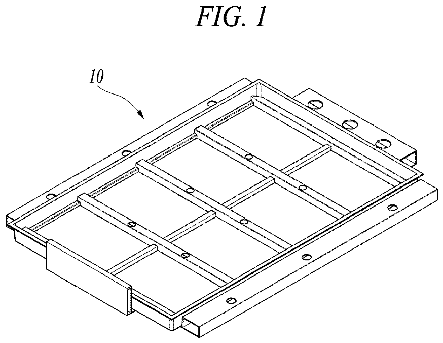

Hereinafter, a battery case in accordance with an embodiment of the present disclosure will be described with reference to FIGS. 1 to 9.

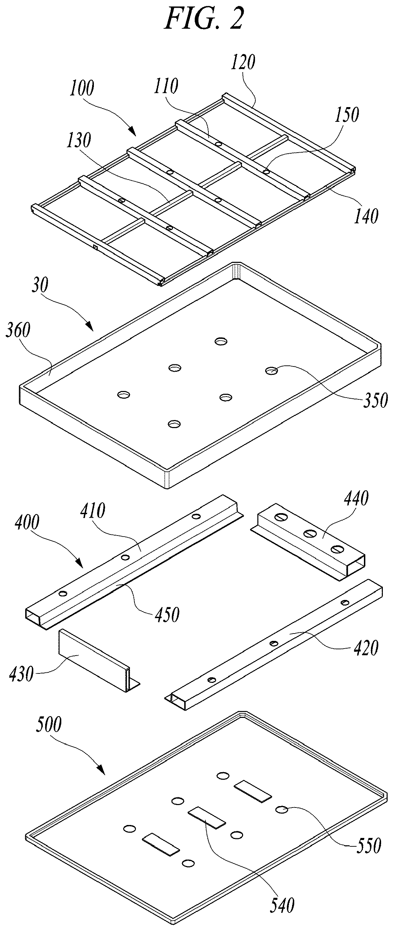

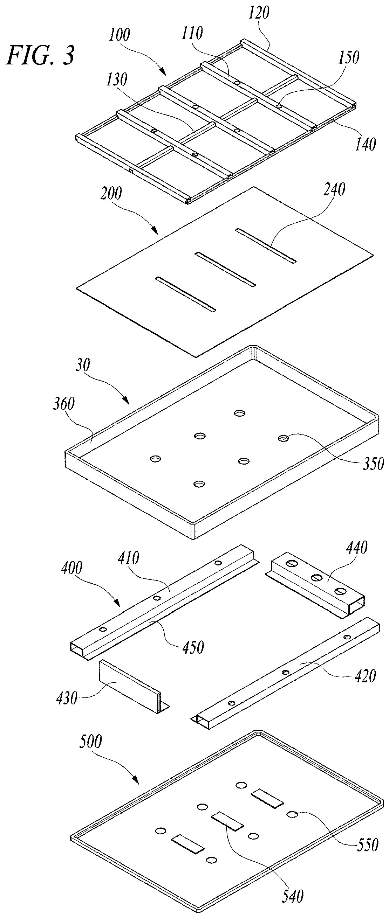

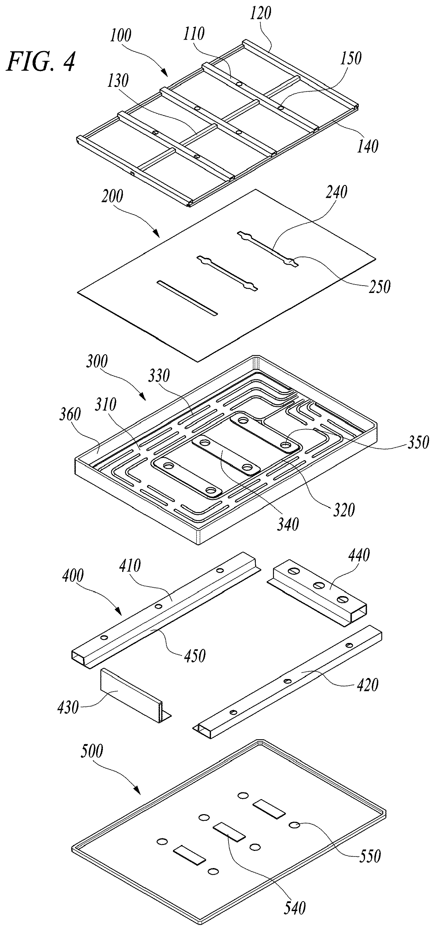

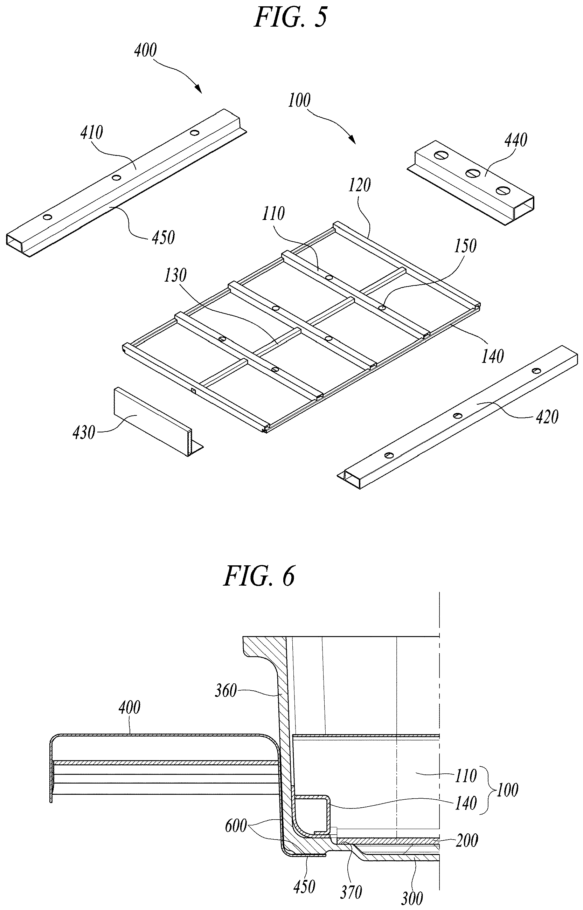

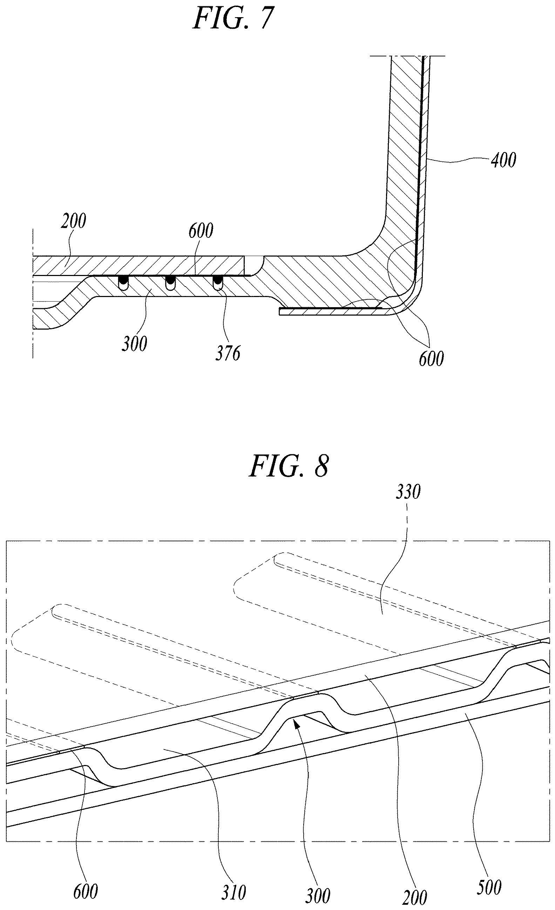

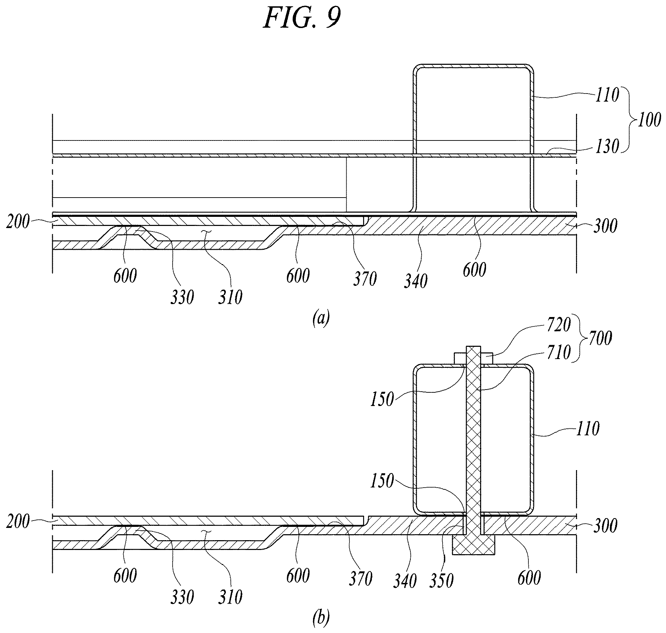

FIG. 1 is a perspective view showing a battery case in accordance with an embodiment of the present disclosure, FIG. 2 is an exploded perspective view of the battery case shown in FIG. 1, in which neither a cooling path nor a heat dissipation plate is present in a cooling block, FIG. 3 is an exploded perspective view of the battery case shown in FIG. 1, in which the cooling path is not present and the heat dissipation plate is present in the cooling block, and FIG. 4 is an exploded perspective view of the battery case shown in FIG. 1, in which both the cooling path and the heat dissipation plate are present in the cooling block. FIG. 5 is an exploded perspective view showing an inner frame and an outer frame in the battery case of FIG. 1. FIG. 6 is a sectional view showing a state in which an inner frame, a heat dissipation plate, and an outer frame are coupled to a portion near to a sidewall of the cooling block in the battery case for a vehicle in accordance with an embodiment of the present disclosure, and FIG. 7 is a sectional view showing a state in which the heat dissipation plate and the outer frame are coupled to an edge portion of the cooling block. FIG. 8 is a sectional view showing a state in which the heat dissipation plate is coupled to the cooling block in which the cooling path is formed, FIG. 9(a) is a sectional view showing a state in which first and third inner frames in an inner frame are coupled to the cooling block along with the heat dissipation plate, and FIG. 9(b) is a sectional view showing a state in which a first inner frame of another shape is coupled to the cooling block.

Referring to FIGS. 1 to 5, a battery case 10 in accordance with an embodiment of the present disclosure functions to support a battery module (not shown), protect the battery module from external shock, and simultaneously cool the battery module. The battery case 10 of the present disclosure supports the battery module from below to form a lower case, and may be coupled to a cover case which covers the battery module.

As shown in FIG. 2, the battery case 10 may include an inner frame 100, a support part 30, and an outer frame 400.

The support part 30 causes the battery module to be seated therein to support the battery module, and includes a sidewall 360 extending upwards from an edge portion.

The inner frame 100 is coupled to the top surface of the cooling block 300 to partition a seat part of the battery module.

The outer frame 400 is coupled to an outer surface of the cooling block 300.

The sidewall 360 of the cooling block 300 may be formed at a predetermined height to enclose the inner frame 100 as well as the battery module (not shown). The inner frame 100 may be coupled to the top surface of the cooling block 300 inside the sidewall 360, and the outer frame 400 may be coupled to a lower portion of the outer surface of the sidewall 360.

As shown in FIG. 3, the battery case 10 may include the inner frame 100, a heat dissipation plate 200, the support part 30, and the outer frame 400.

First, the battery module (not shown) is seated and supported on the top surface of the heat dissipation plate 200.

The inner frame 100 is coupled to the top surface of the heat dissipation plate 200 to partition the seat part of the battery module.

The support part 30 is coupled to the bottom of the heat dissipation plate 200, and includes the sidewall 360 extending upwards from the edge portion.

The outer frame 400 is coupled to the outer surface of the support part 30.

The sidewall 360 of the support part 30 may be formed at a predetermined height to enclose the heat dissipation plate 200 and the inner frame 100 as well as the battery module (not shown). The heat dissipation plate 200 may be coupled to the bottom of the support part 30 inside the sidewall 360, the inner frame 100 may be coupled to the top surface of the heat dissipation plate 200 inside the sidewall 360, and the outer frame 400 may be coupled to the lower portion of the outer surface of the sidewall 360.

As shown in FIG. 4, the battery case 10 may include the inner frame 100, the heat dissipation plate 200, the cooling block 300, and the outer frame 400. In the embodiment shown in FIG. 4, an uneven cooling path 310 is formed on the top surface of the support part 30 of FIGS. 2 and 3, thus forming the cooling block 300.

First, the battery module (not shown) is seated and supported on the top surface of the heat dissipation plate 200. The heat dissipation plate 200 has generally the shape of a rectangular plate, and is made of metal to secure heat transfer performance. In particular, the heat dissipation plate 200 is preferably made of aluminum that is metal which is excellent in heat conductivity and is light in weight.

The inner frame 100 is coupled to the top surface of the heat dissipation plate 200 to partition the seat part of the battery module. In the drawing, the inner frame 100 is formed to allow eight battery modules to be mounted thereon. That is, the inner frame may be formed to allow two or more battery modules to be mounted thereon.

To be more specific, the inner frame 100 may be composed of first inner frames 110 disposed inside the inner frame to extend in a left-and-right direction, second inner frames 120 disposed on front and rear portions outside the inner frame to extend in the left-and-right direction, third inner frames 130 disposed inside the inner frame to extend in a front-and-rear direction, and fourth inner frames 140 disposed on left and right portions outside the inner frame to extend in the front-and-rear direction.

The first inner frame 110 may be formed to be higher than other inner frames, and the remaining inner frames may be formed at the same height. However, the heights of the first to fourth inner frames 110, 120, 130 and 140 are not limited thereto, and the heights of the first to fourth inner frames 110, 120, 130 and 140 may be equal to or different from each other. The inner frames may be separately made of a metal material and then be welded to each other.

The cooling block 300 is coupled to the bottom of the heat dissipation plate 200, and the uneven cooling path 310 is formed on the top surface of the cooling block. The cooling path 310 is sealed by the bottom surface of the heat dissipation plate 200, and the cooling path 310 is configured such that a cooling fluid such as coolant or antifreeze circulates therethrough. Thus, the cooling block 300 cools heat which is generated from the battery module and is transferred through the heat dissipation plate 200.

The cooling path 310 may be formed such that an inlet and an outlet are formed in a side of the cooling block 300 and the cooling fluid flows from the inlet to the outlet throughout most of the surface of the cooling block 300. The cooling path 310 may include a continuous first path partition wall 320 which is formed from the bottom surface of the cooling block 300 in an uneven shape and constitutes the sidewall of the cooling path 310, and a second path partition wall 330 which is intermittently formed in the cooling path 310 to guide the flow of the cooling fluid.

The outer frame 400 is coupled to the outer surface of the cooling block 300, and left and right sides, a front portion, and a rear portion thereof may be separately coupled to the cooling block 300 without being connected to each other. That is, the outer frame 400 may include a first side frame 410 and a second side frame 420 coupled to long sides of the cooling block 300, and a rear frame 430 and a front frame 440 coupled to short sides of the cooling block 300.

The inner frame 100 and the outer frame 400 may be made of a material having high stiffness, such as metal or fiber-reinforced plastic composites, particularly, a steel material to ensure the structural stiffness of the entire battery case 10.

The cooling block 300 may be made of a material such as fiber-reinforced plastic composites, aluminum or steel, and be made of a fiber-reinforced plastic (FRP) composite to achieve lightness. In other words, the cooling block 300 and the inner frame 100 may be made of different materials, or the cooling block 300 and the outer frame 400 may be made of different materials.

The fiber-reinforced plastic composite includes a sheet produced by combining matrix resin and reinforced fiber. For example, the sheet may include matrix resin and long fiber as the reinforced fiber, or include matrix resin and fabric produced by weaving continuous fiber as the reinforced fiber. The fiber-reinforced plastic composite may include a lamination sheet produced by laminating a plurality of sheets.

In this case, the inner frame 100 and the outer frame 400 may be made of a material different from the cooling block 300 made of the fiber-reinforced plastic composite, and be made of a steel material so as to increase the mechanical strength of the cooling block 300 made of a fiber-reinforced plastic composite.

The inner frame 100 and the outer frame 400 made of a steel material may be attached to the cooling block 300 made of a fiber-reinforced plastic composite by an adhesive. Since the inner frame 100 and the heat dissipation plate 200 are different kinds of metal, i.e. steel and aluminum, the inner frame and the heat dissipation plate may be coupled not by welding but by the adhesive. Furthermore, the heat dissipation plate 200 and the cooling block 300 may also be coupled to each other by the adhesive.

The cooling block 300 may be formed to have the thickness of 2 to 5 mm, and the adhesive may be applied with the thickness of 0.3 to 1 mm. As the fiber-reinforced plastic composite of the cooling block 300 is low in heat conductivity and is excellent in heat insulation properties, it is possible to secure sufficient heat insulation properties without including a separate insulation member. In this case, in order to secure the heat insulation properties, the thickness of the cooling block 300 of 2 to 5 mm may be sufficient.

The surface of the cooling block 300 to which the adhesive is applied may be ground by sanding. The surfaces of the inner frame 100 and the outer frame 400 coupled to the cooling block 300 by the adhesive as well as the surface of the heat dissipation plate 200 may be ground by sanding. If the adhesive is applied after an adhesive surface is ground, adhesive strength may be further increased.

The cooling block 300 may include the sidewall 360 extending upwards from the edge portion thereof. This sidewall 360 may be formed at a predetermined height to enclose the heat dissipation plate 200, the inner frame 100 as well as the battery module (not shown). The heat dissipation plate 200 may be coupled to the bottom of the cooling block 300 inside the sidewall 360, the inner frame 100 may be coupled to the top surface of the heat dissipation plate 200 inside the sidewall 360, and the outer frame 400 may be coupled to the lower portion of the outer surface of the sidewall 360. As such, the sidewall 360 is formed on the cooling block 300, so that the heat dissipation plate 200 and the inner frame 100 are coupled in the cooling block, and the outer frame 400 is coupled to the outer portion of the cooling block, thus enhancing the water-tightness of the battery case 10.

In the three embodiments of FIGS. 2 to 4, the inner frame 100 and the outer frame 400 may be disposed to be spaced apart from each other with the sidewall 360 of the cooling block 300 being interposed therebetween. Thus, in the three embodiments, the water-tightness of the battery case 10 can be improved regardless of the presence and absence of the heat dissipation plate and the cooling path.

The coupling structure of the cooling block 300, the inner frame 100, and the outer frame 400 will be described later in detail.

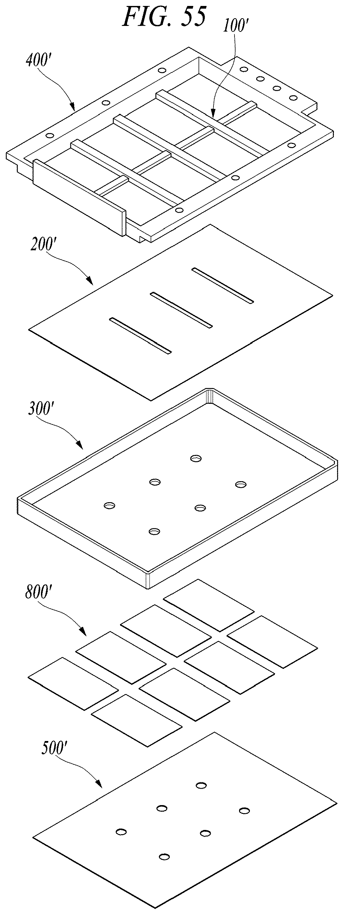

Meanwhile, FIG. 55 is an exploded perspective view of a battery case according to the related art. The conventional battery case includes an inner frame 100' and an outer frame 400', a heat dissipation plate 200', a cooling block 300', an insulation pad 800', and a lower protective plate 500'.

The inner frame 100' and the outer frame 400' are made of metal such as steel or aluminum, and are coupled to each other by welding. The outer frame 400' includes a sidewall extending upwards from the edge portion thereof. Instead, the sidewall is not formed on the cooling block 300'. The outer frame 400' is closed on all sides thereof because front, rear, left and right sidewalls thereof are connected to each other.

The heat dissipation plate 200' may be made of an aluminum material, as in the present disclosure. However, in the related art, an insulation pad 800' is separately provided under the cooling block 300' to prevent heat from being transferred downwards. The lower protective plate 500' is also made of a metal material.

As such, since all components of the conventional battery case are made of metal such as steel or aluminum, it is very disadvantageous in terms of a reduction in weight.

Thereby, there are attempts to change the material into the fiber-reinforced plastic composite for the purpose of lightness. Since it is difficult to satisfy structural stiffness only by the fiber-reinforced plastic composite, there has been proposed a method where the inner and outer frames are still made of a metal material and the weight of parts for supporting the battery on a bottom surface, such as the cooling block, is reduced. However, dissimilar bonding between metal and plastic is not reliable, so that water-tightness is not excellent.

If a plurality of battery modules is seated on the battery case 10, the top surface of the battery module and the upper end of the sidewall 360 may be disposed at the same height. Thus, the bottom surface of a cover case which covers the top of the battery module and is coupled to the battery case 10 may be formed in a flat shape.

Furthermore, the cooling block 300 may include fastening holes 350 to be fastened to the inner frame 100 through fastening holes 250 which are formed in the heat dissipation plate 200. To this end, the inner frame 100 may have fastening holes 150 which are formed in the first inner frame 110. Thus, the adhesive may be applied between the inner frame 100, the heat dissipation plate 200, and the cooling block 300, and simultaneously they may be coupled all together by a fastening member.

The cooling block 300 may further include a spacer 340 which is formed around the fastening hole 350 to protrude upwards. This spacer 340 is formed to enclose the fastening hole 350, and the cooling path 310 is not formed in the spacer 340. The spacer 340 may increase fastening force and strength when a fastening operation is performed through the fastening hole 350.

Meanwhile, the heat dissipation plate 200 may include an unformed part 240 from which a portion corresponding to the spacer 340 that is the portion where the cooling path of the cooling block is not formed is omitted. The width of the unformed part 240 may be formed to be smaller than that of the spacer 340, and the length of the unformed part 240 may be formed to be equal to or smaller than the length of the spacer 340. By forming the unformed part 240 on the heat dissipation plate 200, it is possible to save a material and further reduce a weight.

By such a configuration, the compressive strength of the battery case 10 may range from 150 kN to 250 kN, particularly from 200 kN to 230 kN. The compressive strength of the battery case 10 means the compressive strength on four sides, except for the upper and lower portions of the battery case 10. The compressive strength of the battery case 10 may be measured by a method where a compressive plate is placed on an opposite surface and then a load is applied thereto under the condition that one surface is fixed (Chinese GB/T 31467.3 standard). When the compressive strength of the battery case 10 is 150 kN or less before the compressive plate reaches the battery, impact is exerted on the battery in the event of a vehicle collision, so that explosion and fire may occur. When the compressive strength of the battery case 10 exceeds 250 kN, the effect of reducing weight may be reduced.

Meanwhile, the cooling block 300 may be made of a fiber reinforced plastic (FRP) composite.

The fiber-reinforced plastic composite (FRP) includes a sheet by combining matrix resin and reinforced fiber, and is classified into various types depending on a purpose, a process, required properties, the type, length, content, orientation method of fiber, and the type of impregnating matrix resin.

As the representative fiber-reinforced plastic composite, there are a sheet molding compound (SMC), a bulk molding compound (BMC), prepreg, etc.

Generally, the sheet molding compound (SMC) is an intermediate product which is processed in the form of a sheet by mixing thermosetting resin and long fiber (2 to 50mm), and refers to fiber reinforced plastic which is cured through a hot press. However, herein, the sheet molding compound (SMC) is an intermediate product which is processed in the form of a sheet without being limited to a specific length and type of fiber, and the fiber-reinforced plastic composite which may be cured through the hot press is defined as the SMC.

Therefore, in the present disclosure, the SMC may include reinforced fiber in the form of fabric which is woven by continuous fiber, or may be an intermediate product which is made in the form of a sheet using the fiber-reinforced plastic composite including the continuous fiber oriented in one direction as the reinforced fiber.

Furthermore, in the present disclosure, the SMC is not limited by the type of fiber (glass fiber, carbon fiber, aramid fiber, nylon, PP fiber, etc.).

The matrix resin combined with the reinforced fiber may be any one selected from a group including thermoplastic resin, curable resin, and a mixture thereof.

The fiber-reinforced plastic composite may include reinforced fiber in the form of long fiber or reinforced fiber in the form of fabric woven by continuous fiber in the matrix resin.

Preferably, the battery case for an electric car according to the present disclosure further includes the lower protective plate 500 which is coupled to the lower portion of the cooling block 300.

The lower protective plate 500 may have the shape of a flat plate corresponding to the bottom surface of the cooling block. Furthermore, the lower protective plate 500 may be made of the fiber-reinforced plastic composite.

The lower protective plate 500 may include a protruding support part 540 which is formed at a position corresponding to the spacer 340 of the cooling block 300 to protrude, and a fastening hole 550 which is formed at a position corresponding to the fastening hole 350 of the cooling block 300.

The protruding support part 540 may come into contact with the bottom surface of the spacer 340 to support the cooling block 300.

The fastening hole 550 of the lower protective plate 500 is formed at a position corresponding to the fastening hole 350 of the cooling block 300, so that the lower protective plate 500, the cooling block 300, the heat dissipation plate 200, and the inner frame 100 may be fastened all together by the fastening member.

Meanwhile, the cooling block 300 and the lower protective plate 500 may be integrally formed. The cooling block 300 and the lower protective plate 500 are formed of the same fiber-reinforced plastic composite. Hence, if they are integrally formed, the cooling block 300 may be thicker by the thickness of the lower protective plate 500.

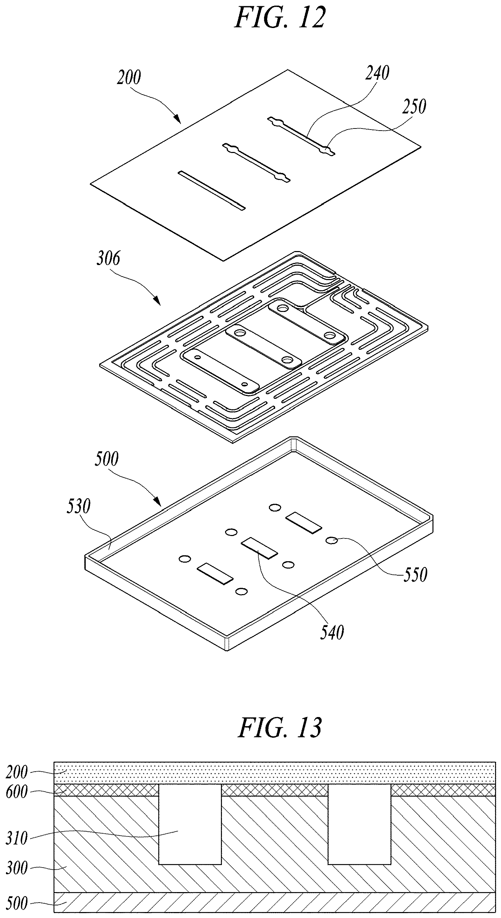

The lower protective plate 500 may include a sidewall 530 (see FIG. 12) extending upwards from an edge portion thereof, and a fastening hole 550 to be fastened to the inner frame 100 through the fastening holes 350 and 250 formed in the cooling block 300 and the heat dissipation plate 200. The latter two embodiments will be described later.

FIG. 6 is a sectional view showing a state in which the inner frame, the heat dissipation plate, and the outer frame are coupled to a portion near to the sidewall of the cooling block in the battery case for the vehicle in accordance with an embodiment of the present disclosure. FIG. 7 is a sectional view showing a state in which the heat dissipation plate and the outer frame are coupled to the edge portion of the cooling block.

The cooling block 300 may include the sidewall 360 extending upwards from the edge portion thereof. This sidewall 360 may be formed at a predetermined height to enclose the heat dissipation plate 200, the inner frame 100, and the battery module.

The heat dissipation plate 200 may be coupled to a stepped part 370 formed on a bottom inside the sidewall 360 of the cooling block 300 by the adhesive 600. After the heat dissipation plate 200 is coupled to the stepped part 370, the top surface of the heat dissipation plate 200 and the bottom of the edge portion of the cooling block 300 are preferably disposed to form the same plane.

FIG. 6 is a longitudinal sectional view taken along a plane passing through the center of the first inner frame 110. After the first inner frame 110 and the fourth inner frame 140 are coupled to each other by welding, they are disposed such that lower ends thereof form the same plane.

The inner frame 100 may be coupled to the top surface of the heat dissipation plate 200 and the bottom of the edge portion of the cooling block 300 inside the sidewall 360 of the cooling block 300 by the adhesive. The first inner frame 110 may be formed in height to be about a half of the sidewall 360.

The outer frame 400 may be coupled to the lower portion of the outer surface of the sidewall 360. The inner surface of the outer frame 400 may be coupled to the lower portion of the outer surface of the sidewall 360 by the adhesive 600, and the height of the upper end of the coupled outer frame 400 may be similar to the height of the first inner frame 110.

A horizontal rib 450 may be formed on the outer frame 400 to extend inwards and support the bottom surface of the edge portion of the cooling block 300. Thus, the top surface of the horizontal rib 450 may be coupled to the bottom surface of the edge portion of the cooling block 300 by the adhesive 600.

The horizontal rib 450 is vertically disposed under the fourth inner frame 140 with the cooling block 300 being interposed therebetween, so that the inner frame 100, the cooling block 300, and the outer frame 400 may be more firmly coupled to each other.

Meanwhile, as shown in FIG. 7, a plurality of perforations 376 may be formed in the bottom of the stepped part 370 to which the heat dissipation plate 200 is attached. The plurality of perforations 376 is holes formed at a predetermined depth in a surface to which the adhesive 600 is applied. When the cooling block 300 has the thickness of 2 to 5 mm, the perforation 376 may be formed to have the inner diameter of 2 to 3 mm. The perforation 376 may or may not pass through the cooling block 300. If the adhesive 600 is applied, it is introduced into each perforation 376 to further increase adhesion.

In order to check adhesive strength when the perforation was formed, an experiment was performed compared to a case where no perforation was formed. A metal specimen was made of aluminum 60 series, and an adhesive was applied at the thickness of 0.3 mm to a surface of the fiber-reinforced plastic composite sheet including glass fiber in the form of long fiber in ultrahigh molecular weight polyethylene (UPE) matrix resin. An adhesive portion had an elongated rectangular shape, and a plurality of perforations each having the inner diameter of 3 mm was formed in this adhesive portion.

After the perforation was formed and then an aluminum specimen and a fiber-reinforced plastic composite sheet were attached, a tensile test was performed. When comparing a case where the perforation was formed with a case where no perforation was formed, it can be seen that tensile strength is increased by about 70%.

FIG. 8 is a sectional view showing a state in which the heat dissipation plate is coupled to the cooling block in which the cooling path is formed, and FIG. 9(a) is a sectional view showing a state in which the first and third inner frames in the inner frame are coupled to the cooling block along with the heat dissipation plate, and FIG. 9(b) is a sectional view showing a state in which a first inner frame of another shape is coupled to the cooling block.

As shown in FIG. 8, a plurality of uneven cooling paths 310 may be formed on the top surface of the cooling block 300, and the plurality of cooling paths 310 may be partitioned by an intermittent second path partition wall 330. In this case, the cooling block 300 may be formed such that the second path partition wall 330 has a thickness similar to those of other portions.

The top surface of the second path partition wall 330 may have a planar area having a predetermined width, and the heat dissipation plate 200 may be coupled by the adhesive 600 which is applied to the top surface of the second path partition wall 330.

A planar area having a wider width may be present in the bottom surface on which the cooling path 310 of the cooling block 300 is formed, and the lower protective plate 500 may come into contact with the bottom surface having the cooling path 310 to be coupled thereto.

FIG. 9(a) is a partial sectional view taken along a plane which passes through the center of the first inner frame 110 and the third inner frame 130 and is parallel to the third inner frame 130, and FIG. 9(b) is a sectional view taken along a plane perpendicular to the first inner frame 110 to show a state in which the first inner frame of another shape is coupled to the cooling block.

As shown in FIG. 9(a), the cooling path may not be formed in an area of the cooling block 300 where the first inner frame 110 is disposed. That is, the first inner frame 110 may be directly coupled to the cooling block 300 by the adhesive 600 in an area where the cooling path is not formed on the top surface of the cooling block 300.

The stepped part 370 for seating the heat dissipation plate 200 thereon may be formed on the edge of the top surface of the cooling block 300 where the cooling path is not formed. Thus, the bottom surface of the third inner frame 130 and the top surface of the heat dissipation plate 200 may be coupled by the adhesive 600, and the bottom surface of the heat dissipation plate 200 and the top surface of the cooling block 300 may be coupled by the adhesive 600.

As shown in FIG. 9(b), the cooling block 300 includes the spacer 340 formed on a portion, to which the first inner frame 110 is coupled, to protrude upwards. The cooling path is not formed on the spacer 340. Stepped parts 370 may be formed on both ends of the spacer 340 so that the heat dissipation plate 200 is seated and coupled by the adhesive 600.

The section of the first inner frame 110 may have the shape of a hollow closed curved surface. To be more specific, the section of the first inner frame 110 may have the shape of a rectangular closed curved surface. Thus, the bottom surface of the first inner frame 110 and the spacer 340 of the cooling block 300 may be coupled by the adhesive 600.

Furthermore, the first inner frame 110 and the spacer 340 of the cooling block 300 may be coupled by a fastening member 700. To this end, the fastening hole 150 may be formed in the upper and bottom surfaces of the first inner frame 110, and the fastening hole 350 may be formed in the spacer 340 of the cooling block 300. The fastening member 700 may be composed of a bolt 710 and a nut 720 which pass through the fastening holes 150 and 350 to be fastened thereto.

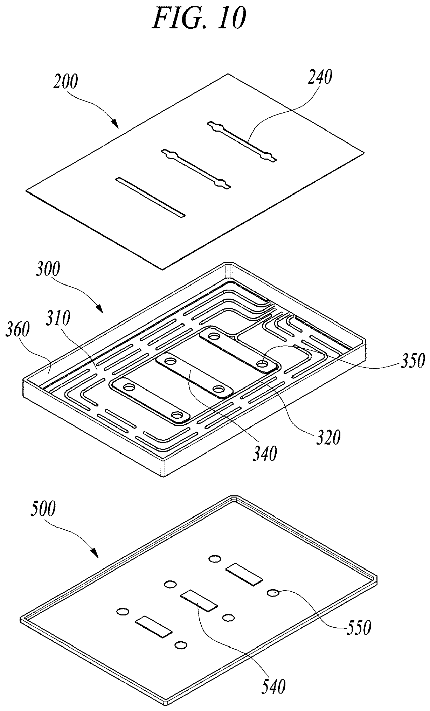

Next, three embodiments for the coupling structure of the heat dissipation plate, the cooling block, and the lower protective plate in the battery case of the present disclosure will be described with reference to FIGS. 10 to 12.

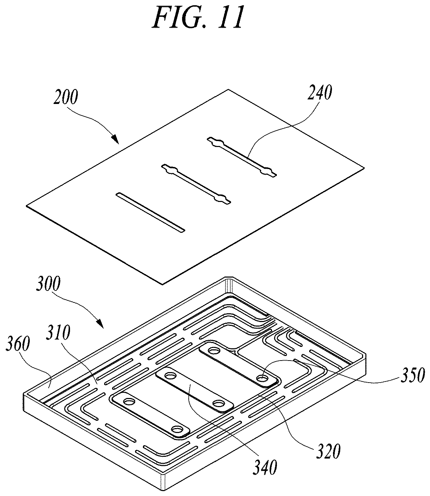

FIG. 10 is an exploded perspective view showing the coupling structure of the heat dissipation plate, the cooling block, and the lower protective plate of FIG. 4, FIG. 11 illustrates a modification of the cooling block, in which the lower protective plate and the cooling block of FIG. 10 are integrally formed, and FIG. 12 illustrates another modification of the cooling block inserted into the lower protective plate.

In the case of the coupling structure of the cooling block 300 shown in FIG. 10, the heat dissipation plate 200, the cooling block 300, and the lower protective plate 500 are included.

The heat dissipation plate 200 is made of an aluminum material. The cooling block 300 is made of a fiber-reinforced plastic composite, and integrally includes the sidewall 360 extending upwards from the edge portion thereof. The lower protective plate 500 is made of a fiber-reinforced plastic composite, and has the shape of a flat plate corresponding to that of the bottom surface of the cooling block 300.

The heat dissipation plate 200, the cooling block 300, and the lower protective plate 500 may be coupled to each other by the adhesive. In addition, they may have fastening holes to be coupled all together. The heat dissipation plate 200 and the cooling block 300 may be first coupled to each other, and then the inner frame 100 and the outer frame 400 may be coupled to each other. Finally, the lower protective plate 500 may be coupled thereto.

Since the sidewall 360 is formed integrally on the cooling block 300, the cooling path of the cooling block 300 may have water-tightness so that there is no water leakage at 12 bar.

In the case of the coupling structure of the cooling block shown in FIG. 11, the heat dissipation plate 200 is the same as the heat dissipation plate 200 of FIG. 10 but includes a cooling block 305 integrated with the lower protective plate.

The cooling block 305 is integrated with the lower protective plate, and the thickness of the cooling block 305 may be equal to or larger than the cooling block 300 of FIG. 10 which is manufactured separately from the lower protective plate 500 and then coupled thereto. The cooling block 305 includes a sidewall 360 extending upwards from an edge portion thereof.

In the integral cooling block 305, the cooling block and the lower protective plate may be integrally formed of a fiber-reinforced plastic composite. For example, the cooling block may be made of a fiber-reinforced plastic composite including long fiber, and the lower protective plate may be made of a fiber-reinforced plastic composite including woven fiber, so that they may be integrally formed.

In the case of the coupling structure of the cooling block shown in FIG. 12, the heat dissipation plate 200 is the same as the heat dissipation plate of FIG. 10 but includes a cooling block 306 having no sidewall and a lower protective plate 503 having a sidewall 530.

The heat dissipation plate 200 is made of an aluminum material. The cooling block 306 may be made of a fiber-reinforced plastic composite, and be made of an aluminum material. If the cooling block 306 is made of the fiber-reinforced plastic composite, it may be coupled to the heat dissipation plate 200 by an adhesive. If the cooling block 306 is made of an aluminum material, it may be coupled to the heat dissipation plate 200 by welding. As this welding method, friction stir welding may be used.

The lower protective plate 503 is made of a fiber-reinforced plastic composite, and integrally includes a sidewall 530 extending upwards from an edge portion thereof. Since the sidewall 530 is integrally formed on the lower protective plate 503, water-tightness may be improved and the number of assembly processes may be reduced.

Hereinafter, various lamination structures of the inner frame 100, the heat dissipation plate 200, the cooling block 300, the outer frame 400, and the lower protective plate 500 constituting the battery case of the present disclosure will be described with reference to FIGS. 13 to 26.

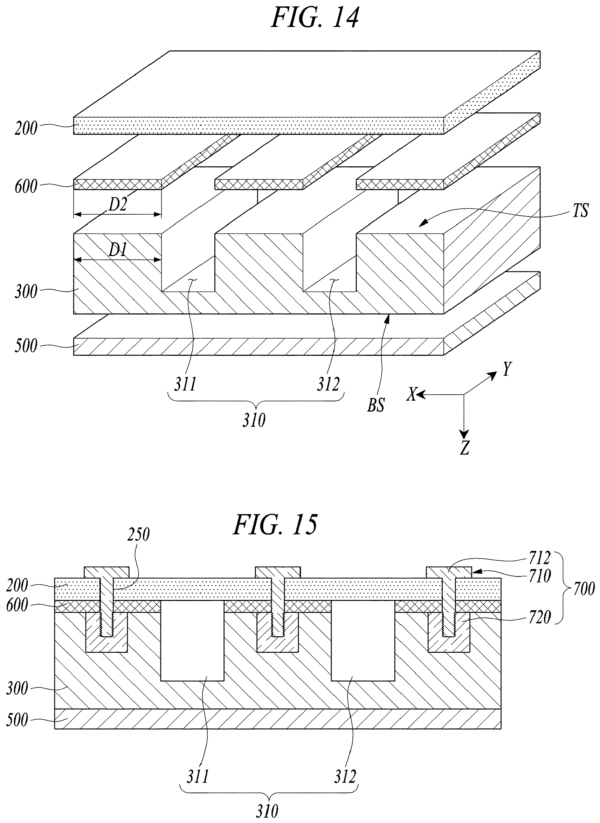

FIG. 13 is a sectional view schematically showing the battery case in accordance with an embodiment of the present disclosure, and FIG. 14 is a schematically exploded sectional view of the battery case shown in FIG. 13.

The battery case 10 functions to support a battery module, protect the battery module from external shock, and simultaneously cool the battery module.

As shown in the drawing, the battery case 10 includes the heat dissipation plate 200, the cooling block 300, an adhesive layer 600, and the lower protective plate 500.

To be more specific, the battery module (not shown) is coupled to one surface of the heat dissipation plate 200, while the cooling block 300 is coupled to the other surface of the heat dissipation plate 200. In order to couple the heat dissipation plate 200 and the cooling block 300, the adhesive layer 600 is coupled to the other surface of the heat dissipation plate 200.

Furthermore, the heat dissipation plate 200 is made of metal to secure thermal conductivity. Furthermore, the heat dissipation plate 200 may be made of aluminum to realize lightness.

The cooling block 300 includes a plurality of uneven cooling paths 310 formed to be opened to the top surface.

The lower protective plate 500 may be coupled to the bottom surface of the cooling block 300. The cooling block 300 and the lower protective plate 500 may be made of two different kinds of fiber-reinforced plastic composites, and be integrally formed through injection molding.

As an example, the cooling block 300 may be made of a fiber-reinforced plastic composite including matrix resin and long fiber as reinforced fiber, the lower protective plate 500 may be made of a fiber-reinforced plastic composite including matrix resin and fabric woven with continuous fiber as reinforced fiber, and the fiber-reinforced plastic composite including reinforced fiber in the form of long fiber and the fiber-reinforced plastic composite including reinforced fiber in the form of fabric may be integrally formed through injection molding, thus forming the cooling block 300.

The adhesive layer 600 is coupled to one surface of the cooling block 300, while the lower protective plate 500 is coupled to the other surface of the cooling block 300. The cooling path 310 is formed on the cooling block 300. Fluid for cooling the battery module (not shown) circulates in the cooling path 310.

The cooling path 310 may be opened to a top surface TS which is one surface of the cooling block 300 to which the adhesive layer 600 is coupled, and may have the shape of a groove which is curved to a bottom surface BS which is the other surface of the cooling block 300.

The cooling path 310 extends not in a laminating direction Z but in a direction parallel to a side forming a lamination surface. FIG. 14 illustrates an embodiment where the cooling path extends in a Y-axis direction which is one axis direction of the lamination surface of the cooling block 300.

Furthermore, a plurality of cooling paths 310 may be formed to be spaced apart from each other in an X-axis direction which is another axis direction of the lamination surface. For example, FIG. 14 illustrates that the adjacent first cooling path 311 and second cooling path 312 are formed.

Next, the lower protective plate 500 functions to support the load of the battery module, and secure the robustness of the cooling block 300. The lower protective plate 500 is coupled to the bottom surface BS of the cooling block 300.

Furthermore, the lower protective plate 500 protects the battery module from external shock.

As described above, the adhesive layer 600 functions to physically couple the heat dissipation plate 200 and the cooling block 300, and is interposed between the heat dissipation plate 200 and the cooling block 300.

Furthermore, a width D2 of the adhesive layer 600 may be formed to be equal or similar to a width D1 of the top surface TS of the cooling block 300 on which the cooling path is not formed.

Furthermore, the adhesive layer 600 is coupled to the top surface TS of the cooling block 300, and is located in an area between adjacent cooling paths. That is, the adhesive layer 600 is located on the top surface TS of the cooling block 300 between the first cooling path 311 and the second cooling path 312 which are adj acent to each other. Thus, the leakage of fluid circulating along the first cooling path 311 and the second cooling path 312 is prevented by the adhesive layer 600, so that the water-tightness of the battery case is improved.

The cooling block 300 of the battery case according to an embodiment of the present disclosure may be made of a fiber reinforced composite material.

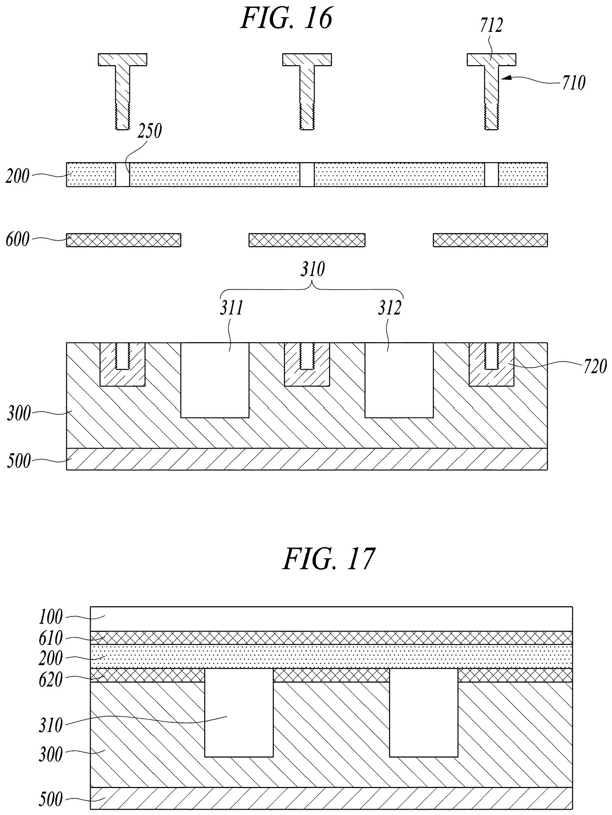

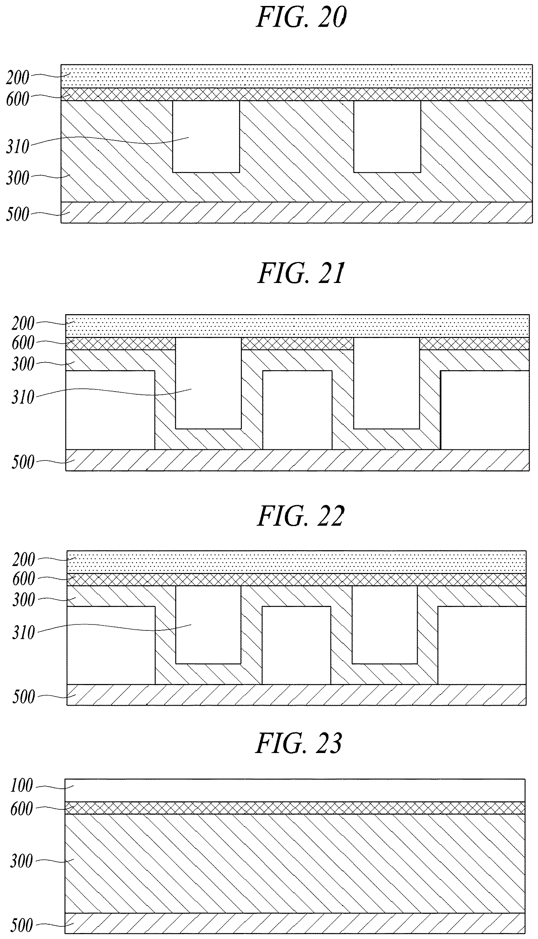

FIG. 15 is a sectional view schematically showing the battery case in accordance with an embodiment of the present disclosure, and FIG. 16 is a schematically exploded sectional view of the battery case shown in FIG. 22.

The battery case of this embodiment further includes a fastening member 700 compared to the battery case shown in FIG. 13.

As shown in the drawing, the battery case 10 includes the heat dissipation plate 200, the cooling block 300, the adhesive layer 600, the lower protective plate 500, and the fastening member 700.

Furthermore, the heat dissipation plate 200, the cooling block 300, the adhesive layer 600, and the lower protective plate 500 are the same as the heat dissipation plate 200, the cooling block 300, the adhesive layer 600, and the lower protective plate 500 shown in FIG. 13, and only a coupling structure coupled with the fastening member 700 is included.

To be more specific, the fastening member 700 of the battery case as well as the adhesive layer 600 functions to couple the heat dissipation plate 200 and the cooling block 300. To this end, the fastening member 700 may be implemented in various forms, such as a rivet, a bolt/nut, or a fastening bolt, to physically couple a plurality of components. FIG. 15 illustrates an example where the fastening member 700 is composed of a set of a bolt and a nut.

That is, the fastening member 700 includes a bolt 710 and a nut 720.

Furthermore, in order to couple the heat dissipation plate 200 and the cooling block 300 using the fastening member 700, the fastening hole 250 through which the bolt 710 passes is formed in the heat dissipation plate 200. Furthermore, the nut 720 is coupled to the cooling block 300.

Furthermore, the nut 720 is coupled to the cooling block 300, and is located between the cooling paths.

That is, the nut 720 is located between neighboring first and second cooling paths 311 and 312.

As described above, the cooling block 300 is made of a fiber-reinforced plastic composite including reinforced fiber in the form of long fiber, the lower protective plate 500 is made of a fiber-reinforced plastic composite including reinforced fiber in the form of fabric, and the nut 720, the fiber-reinforced plastic composite including reinforced fiber in the form of long fiber and the fiber-reinforced plastic composite including reinforced fiber in the form of fabric may be integrally formed through injection molding, thus forming the cooling block 300.

In a state where the cooling block is made in this way and the heat dissipation plate 200 is coupled to the cooling block 300 by the adhesive layer 600, the bolt 710 passes through the fastening hole 250 of the heat dissipation plate 200 and is fastened to the nut 720 coupled to the cooling block 300.

In this case, a head 712 of the bolt 710 is fastened to the nut 720 while pressing the top surface of the heat dissipation plate 200.

Thus, as the battery case according to an embodiment of the present disclosure couples the heat dissipation plate 200 and the cooling block 300 by the fastening member 700 as well as the adhesive layer 600, they may be more firmly coupled to each other and durability may be secured against external shock.

Furthermore, as the fastening member is used, a relative movement between the heat dissipation plate 200 and the cooling block 300 is prevented due to the curing of the adhesive layer, thus facilitating precise coupling.

Furthermore, the nut 720 may be integrated with the cooling block 300 through injection molding.

FIG. 17 is a sectional view schematically showing the battery case in accordance with an embodiment of the present disclosure.

To be more specific, the battery case further includes an adhesive layer and an inner frame compared to the battery case shown in FIG. 13.

As shown in the drawing, the battery case includes the inner frame 100, a first adhesive layer 610, the heat dissipation plate 200, a second adhesive layer 620, the cooling block 300, and the lower protective plate 500.

Furthermore, the heat dissipation plate 200, the cooling block 300, and the second adhesive layer 620 are the same as the heat dissipation plate 200, the cooling block 300, and the adhesive layer 600 shown in FIG. 13.

The cooling path 310 in which fluid circulates to cool the battery module (not shown) is formed on the cooling block 300.

The inner frame 100 functions to more firmly secure the battery module (not shown) and reinforce the stiffness of the battery case. To this end, the inner frame 100 is coupled to the heat dissipation plate 200 by the first adhesive layer 610. That is, the first adhesive layer 610 is interposed between the heat dissipation plate 200 and the inner frame 100.

The battery case according to an embodiment of the present disclosure, which is configured as described above, may more firmly secure the battery module by the inner frame, reinforce the stiffness of the battery case, simplify a coupling process and enhance productivity as the inner frame is coupled and secured to the heat dissipation plate by the first adhesive layer.

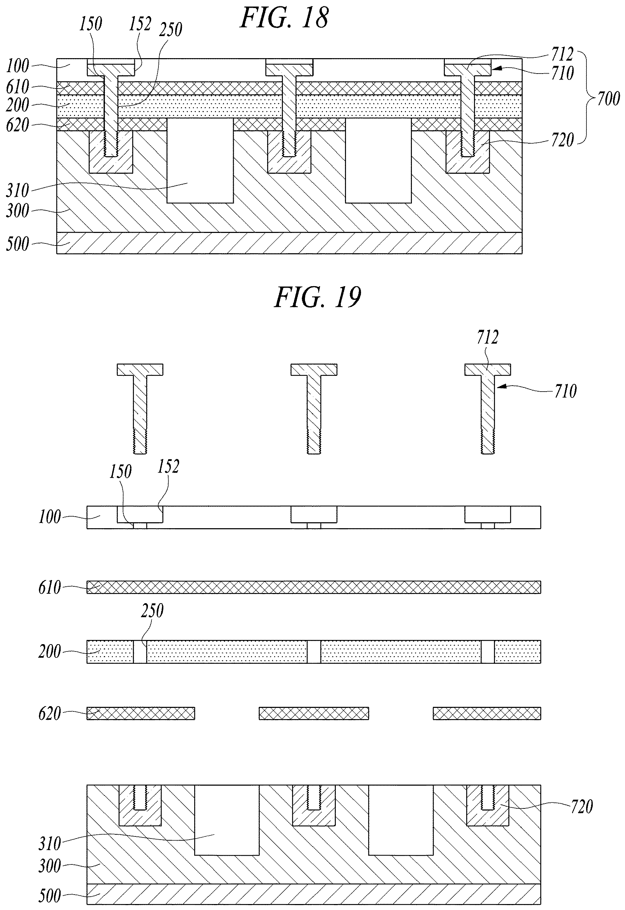

FIG. 18 is a sectional view schematically showing the battery case in accordance with an embodiment of the present disclosure, and FIG. 19 is a schematically exploded sectional view of the battery case shown in FIG. 18.

To be more specific, the battery case further includes a fastening member compared to the battery case shown in FIG. 17.

As shown in the drawing, the battery case includes the inner frame 100, the first adhesive layer 610, the heat dissipation plate 200, the second adhesive layer 620, the cooling block 300, the lower protective plate 500, and a fastening member 700.

Furthermore, the heat dissipation plate 200, the cooling block 300, the second adhesive layer 620, and the first adhesive layer 610 are the same as the heat dissipation plate 200, the cooling block 300, the second adhesive layer 620, and the first adhesive layer 610 shown in FIG. 17, and only a coupling structure coupled with the fastening member 700 is included.

The fastening member 700 as well as the second adhesive layer 620 and the first adhesive layer 610 couples the heat dissipation plate 200, the cooling block 300, and the inner frame 100.

To this end, the fastening member 700 includes the bolt 710 and the nut 720.

Furthermore, in order to couple the inner frame 100, the heat dissipation plate 200, and the cooling block 300 using the fastening member 700, the fastening hole 150 through which the bolt 710 passes is formed in the inner frame 100, and the fastening hole 250 through which the bolt 710 passes is formed in the heat dissipation plate 200.

A seat groove 152 in which the head 712 of the bolt 710 is seated may be formed on the inner frame 100. The depth of the seat groove 152 is formed to be equal to or larger than the height of the head 712 of the bolt 710.

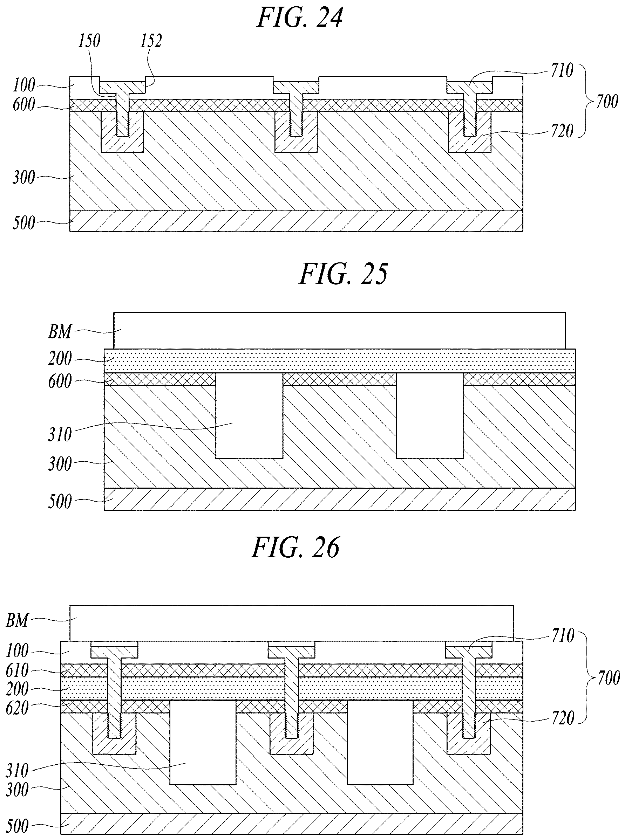

Thus, when the bolt 710 is coupled to the inner frame 100, the head 712 of the bolt 710 is inserted into the seat groove 152, and the fastening member 700 does not protrude outwards from the inner frame 100. Thereby, when the battery module BM is coupled to the inner frame 100 (see FIG. 26), interference by the fastening member 700 does not occur, and the coupling force of the fastening member 700 is also increased.

Furthermore, the nut 720 is coupled to the cooling block 300. Furthermore, the nut 720 is located between the cooling paths 310 in the cooling block 300.

FIG. 20 is a sectional view schematically showing the battery case in accordance with an embodiment of the present disclosure.

The battery case remains the same as the battery case shown in FIG. 13 except for only the shape of the adhesive layer.

As shown in the drawing, the battery case includes the heat dissipation plate 200, the cooling block 300, the adhesive layer 600, and the lower protective plate 500.

Furthermore, the heat dissipation plate 200 and the cooling block 300 are the same as the heat dissipation plate 200 and the cooling block 300 shown in FIG. 13. The adhesive layer 600 has a shape corresponding to that of the heat dissipation plate 200, and is coupled to the cooling block 300 while covering the cooling path 310.

As described above, as the adhesive layer 600 is composed of one sheet, the adhesive layer 600 may be conveniently coupled to the heat dissipation plate 200 and the cooling block 300, and productivity may be enhanced.

FIG. 21 is a sectional view schematically showing the battery case in accordance with an embodiment of the present disclosure.

The battery case remains the same as the battery case shown in FIG. 20 except for only the shape of a cooling-path formation layer.

As shown in the drawing, the battery case includes the heat dissipation plate 200, the cooling block 300, the adhesive layer 600, and the lower protective plate 500.

Furthermore, the heat dissipation plate 200 and the adhesive layer 600 are the same as the heat dissipation plate 200 and the adhesive layer 600 shown in FIG. 20.

The cooling path 310 through which fluid for cooling the battery module circulates is formed on the cooling block 300. The cooling block 300 may be formed such that the top surface thereof is opened to correspond to the cooling path 310 and the bottom surface between adjacent cooling paths 310 is opened.

As described above, the battery case is reduced in material cost, and is improved in productivity.

FIG. 22 is a sectional view schematically showing the battery case in accordance with an embodiment of the present disclosure.

The battery case remains the same as the battery case shown in FIG. 21 except for only the shape of the adhesive layer.

As shown in the drawing, the battery case includes the heat dissipation plate 200, the cooling block 300, the adhesive layer 600, and the lower protective plate 500.

Furthermore, the heat dissipation plate 200 and the cooling block 300 are the same as the heat dissipation plate 200 and the cooling block 300 shown in FIG. 21. The adhesive layer 600 has a shape corresponding to that of the heat dissipation plate 200, and is coupled to the cooling block 300 while covering the cooling path 310.

As described above, as the adhesive layer 600 is composed of one sheet, the adhesive layer 600 may be conveniently coupled to the heat dissipation plate 200 and the cooling block 300, and productivity may be enhanced.

FIG. 23 is a sectional view schematically showing the battery case in accordance with an embodiment of the present disclosure.

As shown in the drawing, the battery case includes the inner frame 100, the cooling block 300, the adhesive layer 600, and the lower protective plate 500.

To be more specific, the battery module (not shown) is coupled to one surface of the inner frame 100, and the cooling block 300 is coupled to the other surface of the inner frame 100. In order to couple the cooling block 300 and the inner frame 100, the adhesive layer 600 is coupled to the other surface of the inner frame 100.

That is, the adhesive layer 600 is interposed between the cooling block 300 and the inner frame 100.

The cooling block 300 and the lower protective plate 500 may be made of two different kinds of fiber-reinforced plastic composites, and be integrally formed through injection molding.

Furthermore, the cooling block 300 is made of a fiber-reinforced plastic composite including reinforced fiber in the form of long fiber, the lower protective plate 500 is made of a fiber-reinforced plastic composite including reinforced fiber in the form of fabric, and the fiber-reinforced plastic composite including reinforced fiber in the form of long fiber and the fiber-reinforced plastic composite including reinforced fiber in the form of fabric may be integrally formed through injection molding, thus forming the cooling block 300.

FIG. 24 is a sectional view schematically showing the battery case in accordance with an embodiment of the present disclosure.

The battery case remains the same as the battery case shown in FIG. 23 except that the former further includes a fastening member.

As shown in the drawing, the battery case includes the inner frame 100, the cooling block 300, the adhesive layer 600, the lower protective plate 500, and the fastening member 700.

Furthermore, the cooling block 300, the inner frame 100, and the adhesive layer 600 are the same as the cooling block 300, the inner frame 100, and the adhesive layer 600 shown in FIG. 23, and only a coupling structure coupled with the fastening member 700 is further included.

The fastening member 700 as well as the adhesive layer 600 functions to couple the cooling block 300 and the inner frame 100, and the fastening member 700 includes the bolt 710 and the nut 720.

The fastening hole 150 through which the bolt 710 passes is formed in the inner frame 100. Furthermore, the nut 720 is coupled to the cooling block 300 opposite to the adhesive layer 600.

To this end, the nut 720, the cooling block 300, and the lower protective plate 500 may be integrally formed through injection molding.

That is, the cooling block 300 is made of a fiber-reinforced plastic composite including reinforced fiber in the form of long fiber, the lower protective plate 500 is made of a fiber-reinforced plastic composite including reinforced fiber in the form of fabric, and the nut 720, the fiber-reinforced plastic composite including reinforced fiber in the form of long fiber and the fiber-reinforced plastic composite including reinforced fiber in the form of fabric may be integrally formed through injection molding, thus forming the cooling block 300.

The seat groove 152 in which the head 712 of the bolt 710 is seated may be formed on the inner frame 100. The depth of the seat groove 152 is formed to be equal to or larger than the height of the head of the bolt 710.

FIG. 25 is a diagram schematically showing a state in which the battery module for the electric car is coupled to the battery case shown in FIG. 13.

As shown in the drawing, the battery module BM for the electric car is coupled to the top of the battery case.

To be more specific, the battery case is the same as the battery case shown in FIG. 13. That is, the battery case includes the heat dissipation plate 200, the cooling block 300, the adhesive layer 600, and the lower protective plate 500.

Furthermore, the battery module BM for the electric car is coupled to the top surface of the heat dissipation plate 200. Thus, the battery case supports the battery module BM for the electric car, and simultaneously protects the battery module BM for the electric car from external force.

Furthermore, heat generated from the battery module BM for the electric car is transferred through the heat dissipation plate 200, and is cooled through the cooling path 310 of the cooling block 300.

Consequently, the battery module BM for the electric car is cooled through heat exchange through the heat dissipation plate 200 having thermal conductivity, and is supported by the battery case including the heat dissipation plate 200, the cooling block 300, the adhesive layer 600, and the lower protective plate 500 to simultaneously provide robustness and structural stability.

FIG. 26 is a diagram schematically showing a state in which the battery module for the electric car is coupled to the battery case shown in FIG. 18.

As shown in the drawing, the battery module BM for the electric car is coupled to the top of the battery case.

To be more specific, the battery case is the same as the battery case shown in FIG. 18. That is, the battery case includes the inner frame 100, the first adhesive layer 610, the heat dissipation plate 200, the second adhesive layer 620, the cooling block 300, the lower protective plate 500, and the fastening member 700.

Furthermore, the battery module BM for the electric car is coupled to the top surface of the heat dissipation plate 200. Thus, the battery case supports the battery module BM, and simultaneously protects the battery module BM for the electric car from external force.

Furthermore, heat generated from the battery module BM for the electric car is transferred through the heat dissipation plate 200, and is cooled through the cooling path 310 of the cooling block 300.

Consequently, the battery module BM for the electric car is cooled through heat exchange through the heat dissipation plate having thermal conductivity, and is supported by the battery case including the inner frame 100, the first adhesive layer 610, the heat dissipation plate 200, the second adhesive layer 620, the cooling block 300, the lower protective plate 500, and the fastening member 700 to simultaneously provide robustness and structural stability.

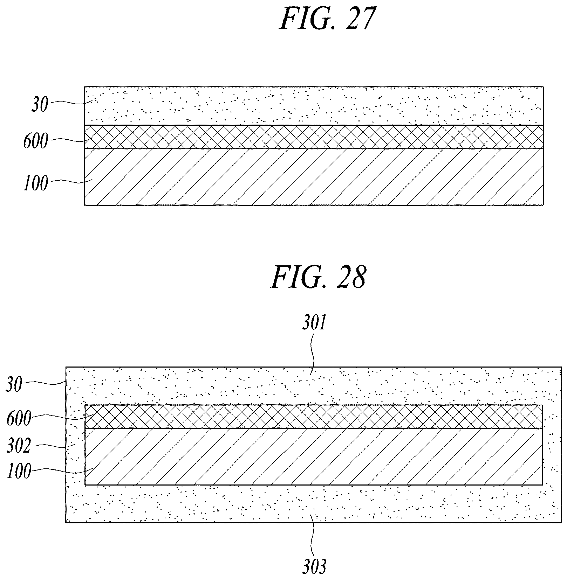

FIG. 27 is a sectional view schematically showing the battery case in accordance with an embodiment of the present disclosure.

As shown in the drawing, the battery case includes the metal frame 100, the adhesive layer 600, and a support layer 30.

To be more specific, the adhesive layer 600 is laminated on the top of the metal frame 100, and the support layer 30 is laminated on the top of the adhesive layer 120. The metal frame 100 may be the above-described inner frame or outer frame, the support layer 30 may be made of a fiber-reinforced plastic composite, and the uneven cooling path may be formed on the support layer 30, thus forming the above-described cooling block.

That is, the adhesive layer 600 is interposed between the metal frame 100 and the support layer 30, and couples the metal frame 100 and the support layer 30.

The adhesive layer 600 may use the adhesive for a structure, so that the robustness of the battery case 10 may be increased.

In an embodiment, after the metal frame 100 and the support layer 30 are individually manufactured, they may be coupled by the adhesive layer 600. In another embodiment, the metal frame 100, the adhesive layer 600, and the support layer 30 are laminated in a mold, and then may be coupled to each other through co-bonding.

Thus, it is possible to form the support layer 30 and perform a coupling process with the metal frame 100 by a single process without performing an additional process for coupling the metal frame 100 and the support layer 30.

In the case of performing the co-bonding, the adhesive may be a semi-cured adhesive. Although a liquid adhesive may be used, its flowability is not controlled when the adhesive is introduced into a process, so that the adhesive may be applied to a unwanted or unnecessary portion and it may be difficult to form a uniform adhesive surface during the process. In the case of using the semi-cured adhesive, it is easy to form a uniform adhesive surface.

In the case of performing the co-bonding, the initial curing temperature of the adhesive forming the adhesive layer 600 may be in the range of -10 °C to +10 °C of the curing temperature of the fiber-reinforced plastic composite forming the support layer 30. More preferably, the initial curing temperature of the adhesive may be in the range of -5 °C to +5 °C of the curing temperature of the fiber-reinforced plastic composite.

Here, the initial curing temperature of the adhesive may be defined as temperature at which adhesive strength becomes 60% compared to a case where the adhesive is fully cured. The adhesive strength may be evaluated with ASTM D3163.

To be more specific, the initial curing temperature is temperature at which adhesive strength becomes 60% compared to a fully cured adhesive when curing is performed for 1 minute per 1mm thickness of the fiber-reinforced plastic composite. For example, when manufacturing a fiber-reinforced plastic composite having the final thickness of 2 mm, curing of 60% is made if a curing operation is performed for two minutes at initial curing temperature.

The curing temperature of the fiber-reinforced plastic composite is similar to the initial curing temperature of the adhesive. Thus, in the case of co-bonding, when the fiber-reinforced plastic composite is deformed while being heated and pressed, it is possible to prevent the adhesive layer from being damaged.

The support layer 30 may include matrix resin and reinforced fiber in the form of long fiber or reinforced fiber in the form of fabric woven with continuous fiber

The metal frame 100 may be made of aluminum.

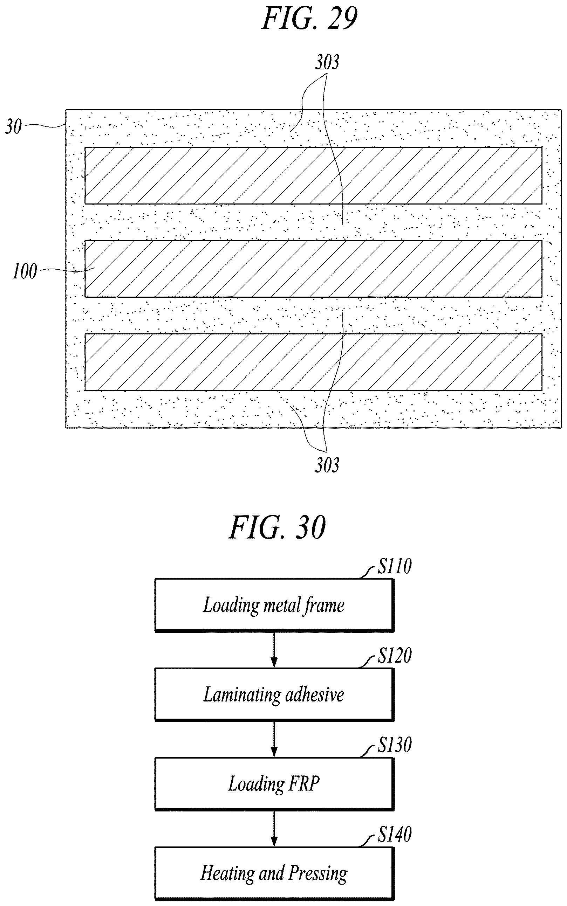

FIG. 28 is a sectional view schematically showing the battery case in accordance with an embodiment of the present disclosure, and FIG. 29 is a schematic bottom view of the battery case shown in FIG. 28.

As shown in the drawing, the battery case includes the metal frame 100, the adhesive layer 600, and a composite-material layer 300.

To be more specific, the composite-material layer 300 covers at least a part of the upper portion of the metal frame 100 and covers at least a part of the lower portion of the metal frame 100 in a laminating direction.

FIGS. 28 and 29 shown an example, in which the composite-material layer 300 covers the upper portion of the metal frame 100 and covers a part of the lower portion of the metal frame 100.

Thus, the composite-material layer 300 includes a top surface portion 301, a side surface portion 302, and a bottom surface portion 303. The top surface portion 301 covers the top of the metal frame 100, the side surface portion 302 covers the side of the metal frame 100, and the bottom surface portion 303 covers the bottom of the metal frame 100.

The top surface portion 301, the side surface portion 302, and the bottom surface portion 303 are integrally formed.

Furthermore, the bottom surface portion 303 may be formed of a plurality of ribs connecting one side of the side surface portion 302 and the other side thereof.

FIG. 30 is a process diagram schematically showing a method of manufacturing a battery case using the co-bonding of the present disclosure.

As shown in the drawing, the method of manufacturing the battery case includes a metal frame loading step S110, an adhesive laminating step S120, a fiber-reinforced plastic composite (FRP) loading step S130, and a heating and pressing step S140.

Meanwhile, unlike a sequence shown in the drawing, the method of manufacturing the battery case may include a fiber-reinforced plastic composite (FRP) loading step of loading a fiber-reinforced plastic composite in a lower mold, an adhesive laminating step of laminating an adhesive on the fiber-reinforced plastic composite loaded in the lower mold, a metal frame loading step of loading a metal frame on the adhesive, and a heating and pressing step of simultaneously imparting heat and pressure to the fiber-reinforced plastic composite, the adhesive, and the metal frame.

To be more specific, the metal frame loading step S110 is the step of loading the metal frame in the lower mold.

The adhesive laminating step S120 is the step of laminating the adhesive on the metal frame loaded in the lower mold.

The fiber-reinforced plastic composite (FRP) loading step S130 is the step of loading the fiber-reinforced plastic composite on the adhesive laminated on the metal frame. Considering that the fiber-reinforced plastic composite is changed by heat and pressure, the composite may be loaded to cover a portion which is 60% or more and is less than 100% of the entire upper surface of the adhesive. In the case of covering the entire surface with the adhesive, an adhesive layer and an adhered layer are deformed during the co-bonding process, so that the adhesive may be applied to areas other than the adhered area of the final product. Further, the thickness of the composite-material layer may be adjusted by adjusting a loading amount.

Furthermore, the initial curing temperature of the adhesive forming the adhesive layer may be in the range of -10 °C to +10 °C of the curing temperature of the fiber-reinforced plastic composite. The curing temperature of the fiber-reinforced plastic composite may range from 130 to 150 °C. In this case, the initial curing temperature of the adhesive may range from 120 to 160 °C. Since the curing temperature of the fiber-reinforced plastic composite is similar to the initial curing temperature of the adhesive, it is possible to prevent the adhesive layer from being damaged when the fiber-reinforced plastic composite is deformed while being heated and pressed.

The heating and pressing step S140 is the step of heating and pressing the metal frame, the adhesive, and the fiber-reinforced plastic composite. To this end, while the lower mold in which the metal frame, the adhesive, and the fiber-reinforced plastic composite are loaded is combined with an upper mold, the metal frame, the adhesive, and the fiber-reinforced plastic composite are heated and pressed.

As described above, the method of manufacturing the battery case may heat and press the metal frame, the adhesive, and the fiber-reinforced plastic composite which are laminated, thus co-bonding these components.

Furthermore, at the fiber-reinforced plastic composite (FRP) loading step and the heating and pressing step, the SMC may cover the side of the metal frame.

The lower mold has a rib forming groove. At the fiber-reinforced plastic composite (FRP) loading step and the heating and pressing step, the fiber-reinforced plastic composite may flow into the rib forming groove, and the rib covering the bottom of the metal frame may be formed.

Thus, the formation of the structure of the battery case and the coupling process may be simultaneously realized by a single process.

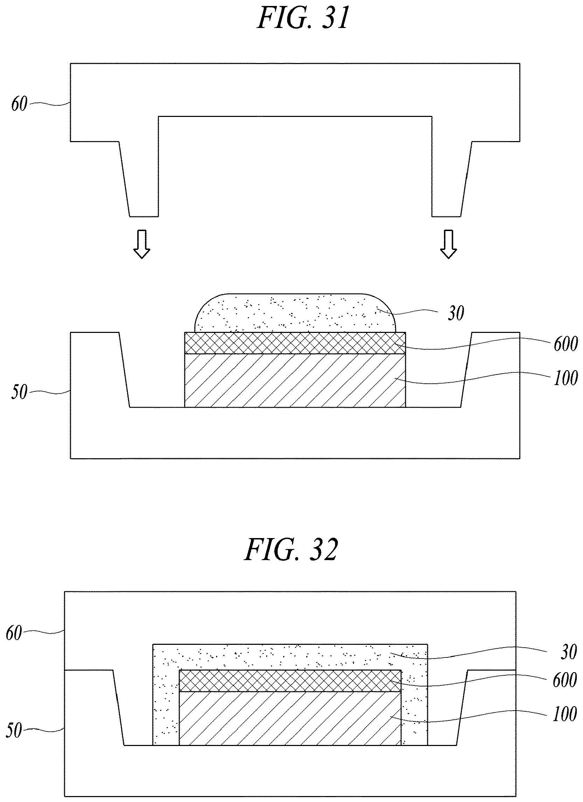

FIG. 31 is a diagram schematically showing the co-bonding process in the manufacturing process shown in FIG. 30.

As shown in the drawing, in order to form the battery case by heating and pressing, the metal frame 100, the adhesive layer 600, and the support layer 30 are sequentially laminated in the lower mold 50.

While the upper mold 60 is combined with the lower mold 50, the metal frame 100, the adhesive layer 600, and the support layer 30 are pressed. In this case, in order to heat the metal frame 100, the adhesive layer 600, and the support layer 30, a process of heating at least one of the lower mold 50 and the upper mold 60 may be optionally performed before or after a pressing process.

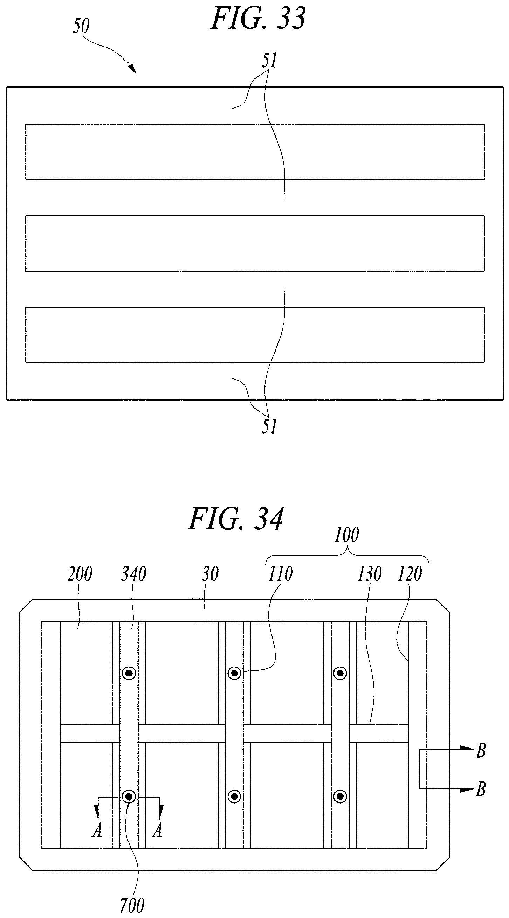

FIG. 32 is a sectional view schematically showing the battery-case manufacturing process shown in FIG. 30, and FIG. 33 is a bottom view schematically showing another embodiment of the lower mold shown in FIG. 31.

As shown in the drawing, the metal frame 100, the adhesive layer 600, and the composite-material layer 300 are sequentially laminated in the lower mold 50.

Furthermore, the composite-material layer 300 is made of a fiber-reinforced plastic composite. When the lower mold 50 is pressed by the upper mold 60, the fiber-reinforced plastic composite forming the composite-material layer 300 flows to cover at least a part of the metal frame 100.

To this end, as shown in FIG. 33, the rib forming groove 51 is formed on the lower mold 50.

As the metal frame 100, the adhesive layer 600, and the composite-material layer 300 are subjected to co-bonding using the upper and lower molds, the battery case shown in FIGS. 28 and 29 may be completed.

A case where the cooling block and the outer frame are coupled by both the adhesive and the co-bonding according to this embodiment is much stronger in adhesive strength compared to a case where the cooling block and the outer frame are simply attached to each other by the adhesive. A conventional method where the frame of an aluminum material and the cooling block of an aluminum material are coupled to each other by welding may be higher in coupling force than this embodiment, but may be much heavier in weight of the battery case than this embodiment.

FIG. 34 is a configuration diagram schematically showing a battery case for a vehicle in accordance with an embodiment of the present disclosure.

As shown in the drawing, the battery case for the vehicle includes the support part 30, the inner frame 100, and a coupling member 700.

To be more specific, the support part 30 is a lower case of the battery case to support the battery module seated on a side thereof. The support part 30 may correspond to the above-described cooling block if the uneven cooling path is formed on the top surface of the support part.

The support part 30 includes the battery-module seat part 200 and a frame coupling part 340. The battery-module seat part 200 may correspond to the above-described heat dissipation plate, and the frame coupling part 340 may correspond to the above-described spacer.

The support part 30 may be made of a fiber-reinforced plastic composite, and the inner frame 100 may be made of a metal material.

The inner frame 100 is coupled to the frame coupling part 340, and partitions the battery-module seat part 200 for the entire area of the support part 30.

Furthermore, the inner frame 100 limits the movement of the battery module seated in the battery-module seat part 200, and supports the battery module against external force.

The inner frame 100 includes the first inner frame 110, the second inner frame 120, and the third inner frame 130.

The first inner frame 110 is located in the support part 30, and extends in one-axis direction.

The second inner frame 120 extends coaxially with the first inner frame 110, and is located on the edge of the support part 30.

That is, the second inner frame 120 is located on the edge of the support part 30, and the first inner frame 110 is located inside the support part 30.

The third inner frame 130 extends in a direction perpendicular to the first inner frame 110 and the second inner frame 120.

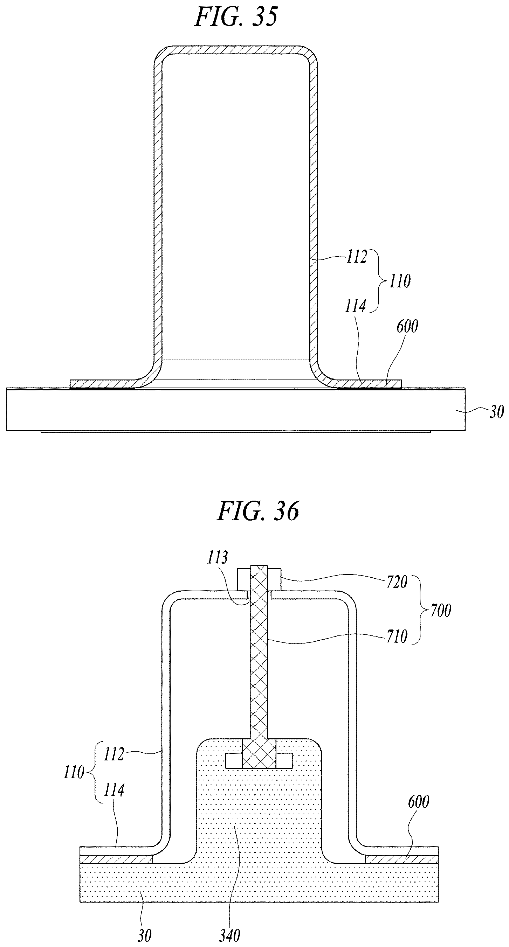

Hereinafter, the detailed shape and organic coupling relationship of the inner frame will be described in detail with reference to FIGS. 35 to 39.

FIG. 35 is a sectional view showing a coupling portion between the inner frame and the cooling block of the battery case for the vehicle shown in FIG. 34.

As shown in the drawing, the first inner frame 110 includes a first inner protruding frame 112 and a first inner supporting frame 114.

To be more specific, the first inner protruding frame 112 protrudes from the first inner supporting frame 114. Furthermore, the first inner supporting frame 114 extends to be parallel to a surface of the support part 30.

The adhesive 600 may be applied between the first inner supporting frame 114 and the support part 30 to couple the first inner supporting frame and the support part.

FIG. 36 is a schematic sectional view taken along line A-A of the first inner frame of the battery case for the vehicle shown in FIG. 34.

As shown in the drawing, the first inner frame 110 includes the first inner protruding frame 112 and the first inner supporting frame 114.

To be more specific, the first inner protruding frame 112 protrudes from the first inner supporting frame 114. Furthermore, the first inner supporting frame 114 extends to be parallel to a surface of the support part 30.

A coupling-member through hole 113 is formed in the first inner protruding frame 112.

The frame coupling part 340 is formed at a position corresponding to the first inner protruding frame 112 to protrude upwards from the support part 30. This frame coupling part 340 may correspond to the above-described spacer.

The support part 30 is opposite to the first inner supporting frame 114, and the frame coupling part 340 is opposite to the first inner protruding frame 112.

Corresponding coupling members are coupled to the frame coupling part 340 and the first inner protruding frame 112, respectively.

For example, FIG. 36 shows an example where the first coupling member, i.e. the bolt 710 is coupled to the frame coupling part 340, and the second coupling member, i.e. the nut 720 is coupled to the first inner protruding frame 112.

Furthermore, the bolt 710 may be coupled to the frame coupling part 340 that is the fiber-reinforced plastic composite by insert molding.

The first inner supporting frame 114 is fixedly coupled to the support part 30 by the adhesive 600 that is a bonding material.

Thus, as the first inner protruding frame 112 is coupled to the frame coupling part 340 by the coupling member 700 and the first inner supporting frame 114 is coupled to the support part 30 by the adhesive 600, the first inner frame 110 is coupled to the support part 30.

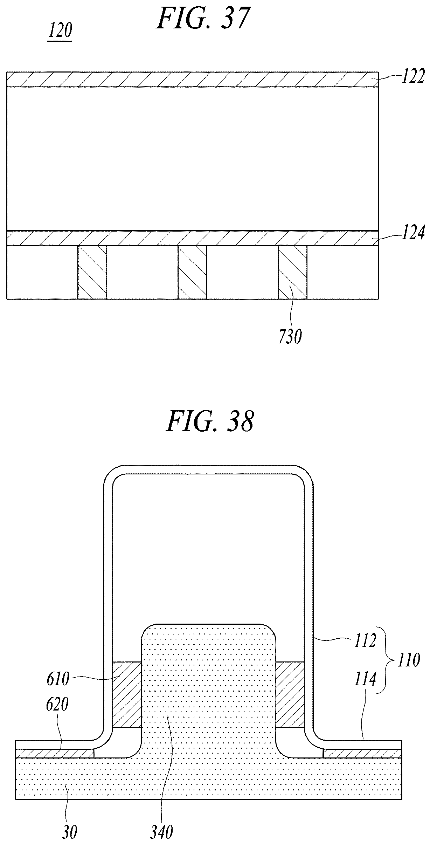

FIG. 37 is a schematic sectional view taken along line B-B of the second inner frame of the battery case for the vehicle shown in FIG. 34.

As shown in the drawing, the second inner frame 120 includes a second inner upper frame 122 and a second inner lower frame 124.

The second inner lower frame 124 extends to be parallel to a surface of the support part 30 and comes into contact with the support part 30, and the second inner lower frame 124 is coupled to the support part 30 by the coupling member 730.

The second inner upper frame 122 is formed to protrude from the second inner lower frame 124.

Furthermore, the coupling member 730 may comprise a self piercing rivet.

Thus, the second inner frame 120 may be coupled to the support part 30 even in a narrow space.

FIG. 38 is a schematic sectional view of the first inner frame of the battery case for the vehicle in accordance with an embodiment of the present disclosure.

As shown in the drawing, the first inner frame 110 is fixedly coupled to the support part 30 by the adhesive.

To be more specific, the first inner frame 110 includes the first inner protruding frame 112 and the first inner supporting frame 114.

The first inner protruding frame 112 protrudes from the first inner supporting frame 114. Furthermore, the first inner supporting frame 114 extends to be parallel to a surface of the support part 30.

The support part 30 includes the frame coupling part 340 formed at a position corresponding to the first inner protruding frame 112 to protrude upwards from the support part 30.

The first inner supporting frame 114 is opposite to the support part 30, and the first inner protruding frame 112 is opposite to the frame coupling part 340.

Furthermore, the adhesive may be applied to a side of the frame coupling part 340 to form a first attaching part 610, and the adhesive may be applied to the support part 30 to form a second attaching part 620.

Thus, the first inner frame 110 is fixedly coupled to the frame coupling part 340 of the support part 30, thus realizing both robustness and lightness.

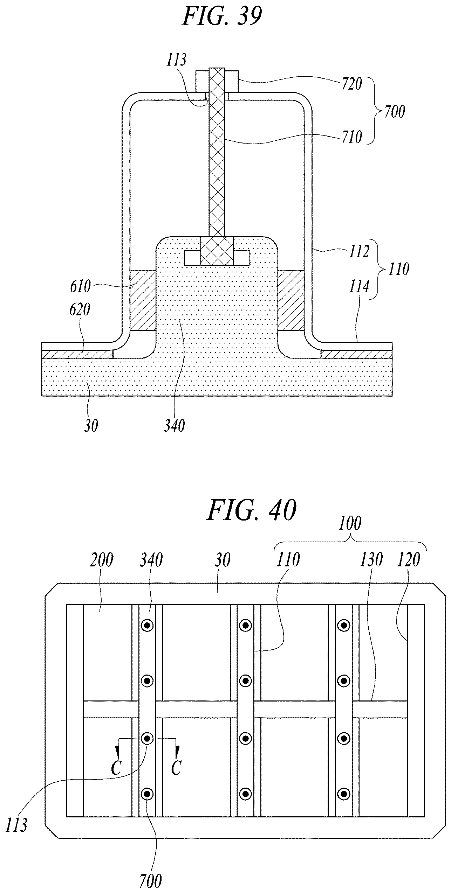

FIG. 39 is a schematic sectional view of the first inner frame of the battery case for the vehicle in accordance with an embodiment of the present disclosure.

The battery case for the vehicle in accordance with an embodiment of the present disclosure shown in the drawing remains the same as the battery case for the vehicle shown in FIGS. 34 and 36 except for the coupling structure between the first inner frame and the frame coupling part.

To be more specific, the first inner frame 110 includes the first inner protruding frame 112 and the first inner supporting frame 114.

The coupling-member through hole 113 is formed in the first inner protruding frame 112.

The frame coupling part 340 is formed at a position corresponding to the first inner protruding frame 112 to protrude upwards from the support part 30.

The first inner supporting frame 114 is opposite to the support part 30, and the first inner protruding frame 112 is opposite to the frame coupling part 340.

The corresponding coupling members 710 and 720 are coupled to the frame coupling part 340 and the first inner protruding frame 112, respectively.

The adhesive may be applied to a side of the frame coupling part 340 to form the first attaching part 610, and the adhesive may be applied to the support part 30 to form the second attaching part 620.

Thus, as the first inner protruding frame 112 is coupled to the frame coupling part 340 by the coupling member 700, and the first inner protruding frame 112 and the first inner supporting frame 114 are coupled to the frame coupling part 340 and the support part 30, respectively, by the adhesive, a coupling force may be further increased.

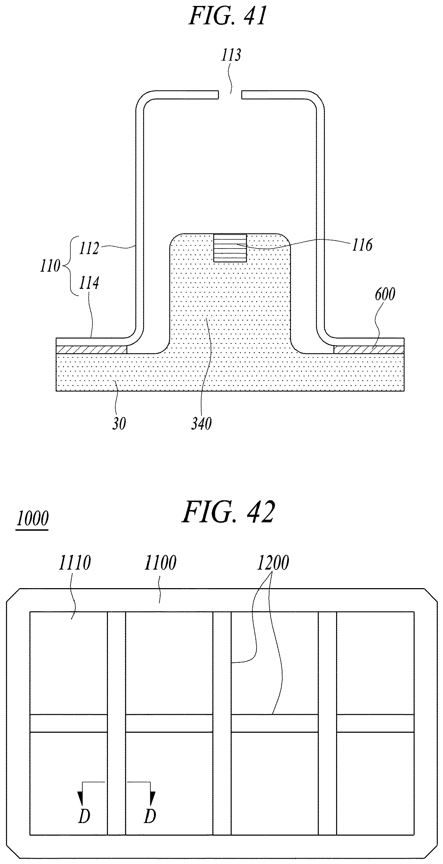

FIG. 40 is a configuration diagram schematically showing the battery case for the vehicle in accordance with an embodiment of the present disclosure, and FIG. 41 is a schematic sectional view taken along line C-C of the first inner frame of the battery case for the vehicle shown in FIG. 40.

The battery case for the vehicle in accordance with an embodiment remains the same as the battery case for the vehicle shown in FIG. 34 except that the former further includes a mounting part.

As shown in the drawing, the battery case for the vehicle includes the support part 30, the inner frame 100, and the coupling member 700.

To be more specific, the support part 30 includes the battery-module seat part 200 and the frame coupling part 340. The inner frame 100 is coupled to the frame coupling part 340, and partitions the battery-module seat part 200 for the entire area of the support part 30.

Furthermore, the inner frame 100 limits the movement of the battery module seated in the battery-module seat part 200, and supports the battery module against external force.

The inner frame 100 includes the first inner frame 110, the second inner frame 120, and the third inner frame 130.

The first inner frame 110 further includes a mounting coupling hole, compared to the first inner frame 110 shown in FIGS. 34 and 36.

That is, the first inner frame includes the first inner protruding frame 112 and the first inner supporting frame 114.

In addition to the coupling-member through hole (denoted by reference numeral 113 in FIG. 3), a mounting coupling hole 113 is further formed in the first inner protruding frame 112. The mounting coupling hole 113 serves to fix the battery case for the vehicle to a vehicle body.

The frame coupling part 340 is formed at a position corresponding to the first inner protruding frame 112 to protrude upwards from the support part 30.

A mounting coupling part 116 is formed in the frame coupling part 340 to be opposite to the mounting coupling hole 113.

The mounting coupling part 116 may be a fastening groove to which a screw is fastened.

Thus, in a state where the mounting coupling member is coupled to the vehicle body, the mounting coupling member may be coupled to the mounting coupling part 116 through the mounting coupling hole 113.

Furthermore, the mounting coupling member may be formed in the frame coupling part 340 through insert molding, and may be fixedly coupled to the vehicle body.

Corresponding coupling members (denoted by reference numeral 700 in FIG. 36) are coupled to the frame coupling part 340 and the first inner protruding frame 112, respectively.

Furthermore, the first inner supporting frame 114 is coupled to the support part 30 by the adhesive 600.

Thus, the first inner protruding frame 112 may be coupled to the frame coupling part 340 by the coupling member, and the first inner supporting frame 114 may be coupled to the support part 30 by the adhesive 600, and coupled to the frame coupling part 340 by the mounting coupling member.

FIG. 42 is a configuration diagram schematically showing a battery case for an electric car in accordance with an embodiment of the present disclosure.

As shown in the drawing, the battery case 1000 for the electric car includes a support part 1100 and an inner frame 1200.

To be more specific, the support part 1100 is the lower case of the battery case to support the battery module seated on a side.

The inner frame 1200 is coupled to the support part 1100, and partitions the battery-module seat part 1100 for the entire area of the support part 1100.

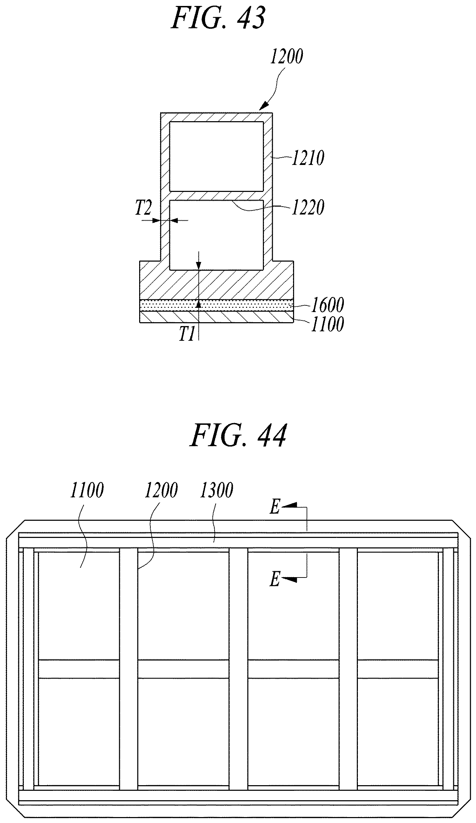

Furthermore, the inner frame 1200 limits the movement of the battery module seated in the battery-module seat part 1100, and supports the battery module against external force. The inner frame 1200 may be formed through an extrusion process, and be coupled to the support part 1100 by the adhesive (denoted by reference numeral 1600 in FIG. 43).

The inner frame 1200 may be made of a fiber-reinforced plastic composite, and particularly be made of a fiber-reinforced plastic composite including continuous fiber as reinforced fiber. Thereby, it is possible to obtain the battery case for the electric car having mechanical strength while realizing lightness.

Hereinafter, the detailed shape and organic coupling relationship of the inner frame will be described in detail with reference to FIG. 43.

FIG. 43 is a schematic sectional view taken along line D-D of the inner frame of the battery case for the vehicle shown in FIG. 42.

As shown in the drawing, the inner frame 1200 is coupled to the support part 1100 by the adhesive 1600. The inner frame 1200 includes an inner external frame 1210 and an inner internal frame 1220.

To be more specific, the inner external frame 1210 forms the external body of the inner frame, and the inner internal frame 1220 is formed inside the inner external frame 1210. Furthermore, the inner internal frame 1220 may comprise a reinforcing rib that connects one side of the inner external frame 1210 and the other side thereof.

For example, the inner external frame 1210 generally has the shape of " 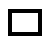 ", and defines a hollow part therein. Furthermore, the inner internal frame 1220 spanning the hollow part may be formed in the shape of " 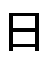 ".

Furthermore, as the inner frame 1200 is formed through extrusion or pultrusion molding as described above, the thicknesses of the inner external frame 1210 and the inner internal frame 1220 may be optionally adjusted.

That is, the thickness T1 of the inner external frame 1210 forming the bottom may be greater than the thickness T2 of the inner external frame 1210 forming the side.

Furthermore, this may be implemented in various ways in view of the characteristics of the battery module and the case mounted on the vehicle.

FIG. 44 is a configuration diagram schematically showing a battery case for an electric car in accordance with an embodiment of the present disclosure.

As shown in the drawing, the battery case for the electric car further includes an outer frame, compared to the battery case shown in FIG. 42.

To be more specific, the battery case for the electric car includes a support part 1100, an inner frame 1200, and an outer frame 1300.

Furthermore, since the support part 1100 and the inner frame 1200 are the same as the support part 1100 and the inner frame 1200 of the above-described embodiment, a detailed description thereof will be omitted herein.

The outer frame 1300 is coupled to the edge of the support part 1100 to form the periphery of a lower case.

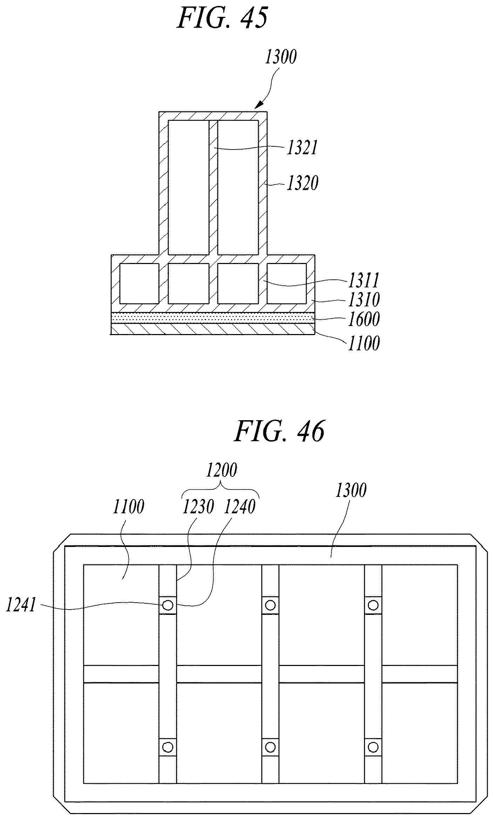

Furthermore, the outer frame 1300 may be formed through extrusion or pultrusion molding, and be coupled to the support part 1100 by the adhesive (denoted by reference numeral 1600 in FIG. 45).

Hereinafter, the detailed shape and organic coupling relationship of the outer frame will be described in detail with reference to FIG. 45.

FIG. 45 is a schematic sectional view taken along line E-E of the outer frame in the battery case for the vehicle shown in FIG. 44.

As shown in the drawing, the outer frame 1300 includes an outer lower support frame 1310 and an outer side support frame 1320.

To be more specific, while the outer lower support frame 1310 supports the outer side support frame 1320, the outer lower support frame 1310 and the outer side support frame 1320 are integrally formed.

The outer lower support frame 1310 is coupled to the support part 1100 by the adhesive 1600. The inner frame 1200 may be supported in the outer lower support frame 1310.

That is, the inner frame 1200 may be coupled to the top surface C of the outer lower support frame 1310 to be held thereon.

In order to increase strength, an outer internal lower support frame 1311 as the reinforcing rib may be formed in the outer lower support frame 1310.

In order to increase strength, an outer internal side support frame 1321 as the reinforcing rib may be formed in the outer side support frame 1320.

That is, the outer lower support frame 1310 defines a hollow part therein, and the outer internal lower support frame 1311 spans the hollow part. The outer side support frame 1320 defines a hollow part therein, and the outer internal side support frame 1321 spans the hollow part.

FIG. 46 is a configuration diagram schematically showing a battery case for an electric car in accordance with an embodiment of the present disclosure.

The battery case for the electric car remains the same as the battery case for the electric car according to the preceding embodiment, except for only the structure of the inner frame.

To be more specific, the battery case for the electric car includes the support part 1100, the inner frame 1200, and the outer frame 1300.

The inner frame 1200 includes an inner frame body 1230 and an inner frame coupling body 1240.

The inner frame body 1230 has the same sectional shape as the inner frame 1200 shown in FIG. 43.

The inner frame coupling body 1240 is coupled to the inner frame body 1230, and has a mounting-bolt coupling part 1241 to be coupled to the vehicle body.

The inner frame body 1230 may be made of a plastic composite reinforced by glass fiber or carbon fiber, and be formed through an extrusion process.

The inner frame coupling body 1240 may be made of a steel or aluminum material.

The battery case for the electric car in accordance with an embodiment of the present disclosure is configured as described above, so that durability and lightness may be attained and the processability of the mounting-bolt coupling part may be improved.

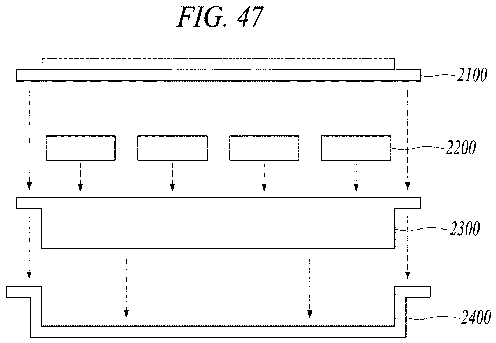

FIG. 47 is a configuration diagram schematically showing the technical idea of a battery case package for a vehicle in accordance with the present disclosure.

As shown in the drawing, the battery case package for the vehicle includes an upper case 2100, a battery module 2200, a lower case 2300, and a lower protective plate 2400.

To be more specific, the battery module 2200 is seated and secured on the lower case 2300, and the upper case 2100 is coupled to the top of the lower case 2300 to cover the battery module 2200.

The lower protective plate 2400 is coupled to the bottom of the lower case 2300.

Thus, the lower protective plate 2400 is coupled to the battery case including the upper case 2100, the battery module 2200, and the lower case 2300.

The lower protective plate 2400 is made of a composite material. Furthermore, the lower protective plate 2400 may be made of a thermosetting plastic composite material including glass fiber.

The lower case 2300 and the lower protective plate 2400 are coupled through the coupling member. Furthermore, the lower protective plate 2400 of the composite material may be integrated with the lower case 2300 of the composite material.

Thus, the battery case package for the vehicle may realize lightness and protect the bottom of the battery case for the vehicle.

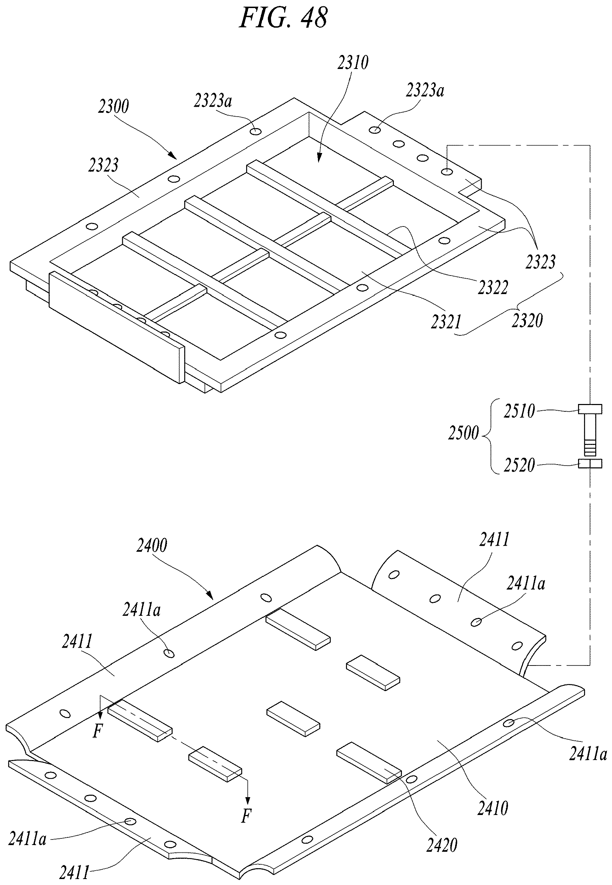

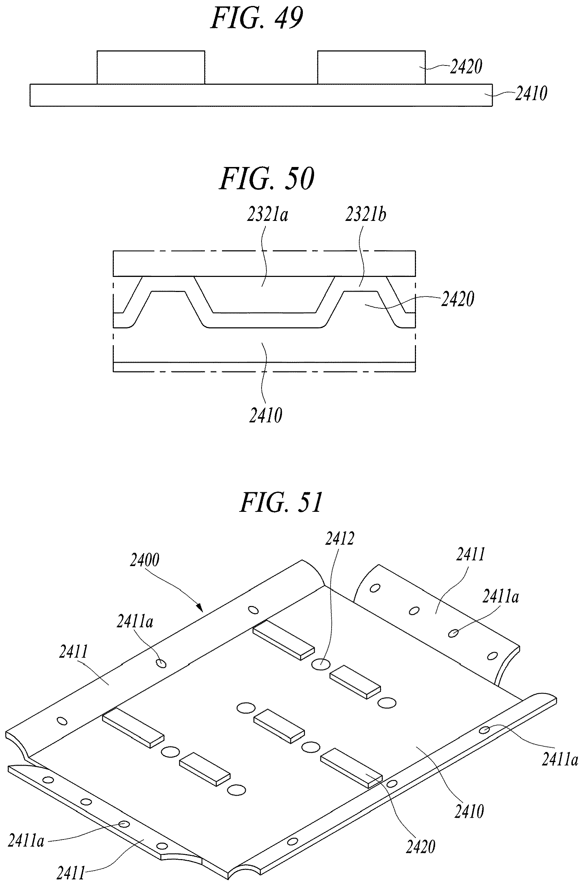

FIG. 48 is a configuration diagram schematically showing a lower case and a lower protective plate, in the battery case package for the vehicle in accordance with an embodiment of the present disclosure, and FIG. 49 is a schematic sectional view taken along line F-F of the lower protective plate shown in FIG. 48.

As shown in the drawing, in order to protect the battery case, the lower protective plate 2400 is coupled to the bottom of the lower case 2300. Furthermore, a coupling member 2500 couples the lower case 2300 and the lower protective plate 2400.

To be more specific, the lower case 2300 serves to the battery module seated thereon, and includes a battery-module seat part 2310 on which the battery module is fixedly seated, and a frame part 2320.

The frame part 2320 includes a body frame 2321, a support frame 2322, and an extension frame 2323.

The support frame 2322 is coupled to the body frame 2321 to partition the battery-module seat part 2310 for the entire area of the body frame 2321.

The extension frame 2323 extends outwards from the body frame 2321, and a lower-protective-plate coupling part 2323a is formed to correspond to the coupling member 2500.

The lower protective plate 2400 includes a plate part 2410 and a protruding support part 2420, and an extension coupling part 2411 is formed on the plate part 2410.

The plate part 2410 corresponds to the body frame 2321, and the protruding support part 2420 is coupled to the plate part 2410 or extends from the plate part 2410.

Furthermore, the protruding support part 2420 may protrude to be opposite to the lower case 2300. When the lower protective plate 2400 is coupled to the lower case 2300, the protruding support part 2420 prevents a gap between the lower case 2300 and the lower protective plate 2400 from increasing, and serves as a damping when external force is applied thereto.

The extension coupling part 2411 is formed to correspond to the extension frame 2323, and the lower-case coupling part 2411a corresponding to the lower-protective-plate coupling part 2323a is formed on the extension coupling part 2411.

The lower protective plate 2400 may be made of a composite material. Furthermore, the lower protective plate 2400 may be made of a fiber-reinforced plastic composite.

The plate part 2410 may be made of a fiber-reinforced plastic composite (woven SMC) including reinforced fiber in the form of fabric, and the protruding support part 2420 may be made of a fiber-reinforced plastic composite (chop SMC) including reinforced fiber in the form of long fiber.

Furthermore, as the protruding support part 2420 is made of a fiber-reinforced plastic composite including reinforced fiber in the form of long fiber, the protruding support part may more efficiently perform the damping of the battery case.

Thus, the protruding support part 2420 may be optionally formed in some area of the plate part 2410 having strong vibration, compared to other areas.

The coupling member 2500 may be implemented in various ways to couple the lower-protective-plate coupling part 2323a and the lower-case coupling part 2411a.

Furthermore, in FIG. 48, as an example of the coupling member 2500, the lower-protective-plate coupling part 2323a, and the lower-case coupling part 2411a, the lower-protective-plate coupling part 2323a and the lower-case coupling part 2411a may be composed of through holes, and the coupling member 2500 may be composed of a bolt 2510 and a nut 2520, which are inserted into a coupling hole.

The battery case package for the vehicle in accordance with an embodiment of the present disclosure is configured as described above. As the lower-protective-plate coupling part 2323a and the lower-case coupling part 2411a are coupled by the coupling member 2500, the lower protective plate 2400 is coupled to the lower case 2300.

FIG. 50 is a sectional view schematically showing an embodiment in which the lower case and the lower protective plate shown in FIG. 48 are coupled to each other.

As shown in the drawing, cooling paths 2321a are formed on the body frame 2321 of the lower case 2300 to cool the battery module. Furthermore, a space 2321b is defined between the cooling paths 2321a.

The plate part 2410 and the protruding support part 2420 are formed on the lower protective plate 2400, the plate part 2410 supports the bottom of the cooling path 2321a, and the protruding support part 2420 supports the bottom of the space 2321b.

Thus, the lower protective plate 2400 may be in close contact with the lower case 2300 to be secured thereto.

FIG. 51 is a configuration diagram schematically showing the lower protective plate in accordance with an embodiment of the present disclosure.

As shown in the drawing, the lower protective plate 2400 further includes a mounting coupling part, compared to the lower protective plate 2400 shown in FIG. 48.

To be more specific, the lower protective plate 2400 includes a plate part 2410 and a protruding support part 2420, and an extension coupling part 2411 is formed on the plate part 2410.

Furthermore, the mounting coupling part 2412 is formed on the plate part 2410. The mounting coupling part 2412 couples the battery case package for the vehicle to the vehicle body. To this end, coupling holes corresponding to the mounting coupling part 2412 may be formed in the upper case and the lower case, respectively.

Next, the material of each of components forming the battery case of the present disclosure will be described.

The inner frame 100 may be made of a material having high stiffness, such as metal or a fiber-reinforced plastic composite, to ensure the structural stiffness of the entire battery case 10.

The metal material may be any one selected from a group consisting of, particularly, iron, stainless steel, aluminum, copper, brass, nickel, zinc, and alloy thereof, and elements constituting the metal may be mainly composed of iron or aluminum. In this regard, the expression "mainly composed" means that anything occupies 90 wt% or more.

In particular, steel such as general structural rolled steel (SS), cold-rolled steel (SPCC), or high-tensile material (high-tensile steel), stainless steel such as SUS304 or SUS316, aluminum of 1000 to 700 series, and alloy thereof are suitable. Furthermore, the metal material may be made of two or more types of metal, or be metal-plated on a surface thereof.

The heat dissipation plate 200 may be made of a metal material having high thermal conductivity.

The metal material may be any one selected from a group consisting of, particularly, iron, stainless steel, aluminum, copper, brass, nickel, zinc, and alloy thereof, and elements constituting the metal may be mainly composed of iron or aluminum. In this regard, the expression "mainly composed" means that anything occupies 90 wt% or more.

In particular, the metal material is preferably made of aluminum of 1000 to 700 series and alloy thereof, in terms of heat dissipation performance.

The outer frame 400 may be made of a material having high stiffness, such as metal or a fiber-reinforced plastic composite, to ensure the structural stiffness of the entire battery case 10.

The metal material may be any one selected from a group consisting of, particularly, iron, stainless steel, aluminum, copper, brass, nickel, zinc, and alloy thereof, and elements constituting the metal may be mainly composed of iron or aluminum. In this regard, the expression "mainly composed" means that anything occupies 90 wt% or more.

In particular, steel such as general structural rolled steel (SS), cold-rolled steel (SPCC), or high-tensile material (high-tensile steel), stainless steel such as SUS304 or SUS316, aluminum of 1000 to 700 series, and alloy thereof are suitable. Furthermore, the metal material may be made of two or more types of metal, or be metal-plated on a surface thereof.

The adhesive may be any one selected from a group consisting of an acrylic adhesive, an epoxy adhesive, an urethane adhesive, an olefin adhesive, an EVA (Ethylene vinyl acetate) adhesive, a silicon adhesive, and a mixture thereof, and may include a thermoplastic component and a thermosetting component, for example.

The thermoplastic component of the adhesive may be a thermoplastic polymer, e.g. polyolefin such as polyethylene or polypropylene. Furthermore, the thermoplastic component of the adhesive may be any one selected from a group consisting of polystyrene, acrylonitrile styrene, butadiene, polyethylene terephthalate, polybutylene terephthalate, polybutylene tetrachlorate, polyvinyl chloride, plasticized polyvinyl chloride, unplasticized polyvinyl chloride, and a mixture thereof.

Furthermore, the thermoplastic component of the adhesive may be any one selected from a group consisting of polyarylene ether, polycarbonate, polyester carbonate, thermoplastic polyester, polyimide, polyetherimide, polyamide, acrylonitrile-butylacrylate-styrene polymer, amorphous nylon, polyarylene ether ketone, polyphenylene sulfide, polyaryl sulfone, polyether sulfone, liquid crystal polymer, poly(1,4-phenylene) compound, polycarbonate, nylon, silicon, and a mixture thereof.

The thermosetting component of the adhesive may be any one selected from a group consisting of a material containing one or more epoxy groups, epoxide, epoxy resin, epoxy adhesive, polyester, polyester resin, thermosetting urethane, thermosetting polyurethane, diallyl-phthalate, polyimide, polyamide, cyanate ester, polycyanurate, and a mixture thereof.

As for a weight ratio of the thermoplastic component and the thermosetting component which are used as the adhesive, in some examples, the content of the thermoplastic component may be higher than the content of the thermosetting component. For example, the adhesive may contain the thermosetting component less than 10 wt% or 5 wt% in the total weight of the adhesive. Although the thermosetting component may improve the adhesive strength of the fiber-reinforced plastic composite, it is preferable that an excessive amount of thermosetting component is not contained to thermoform or form the fiber-reinforced plastic composite.

Meanwhile, in the case of performing the co-bonding, the initial curing temperature of the adhesive may be in the range of -10 °C to +10 °C of the curing temperature of the fiber-reinforced plastic composite. More preferably, the initial curing temperature of the adhesive may be in the range of -5 °C to +5 °C of the curing temperature of the fiber-reinforced plastic composite.

Here, the initial curing temperature of the adhesive may be defined as temperature at which adhesive strength becomes 60% compared to a case where the adhesive is fully cured.

To be more specific, the initial curing temperature is temperature at which adhesive strength becomes 60% compared to a fully cured adhesive when curing is performed for 1 minute per 1mm thickness of the fiber-reinforced plastic composite. For example, when manufacturing a fiber-reinforced plastic composite having the final thickness of 2 mm, curing of 60% is made if a curing operation is performed for two minutes at initial curing temperature.

The curing temperature of the fiber-reinforced plastic composite may range from 130 to 150 °C. In this case, the initial curing temperature of the adhesive may range from 120 to 160 °C, and more preferably, range from 125 to 155 °C.

The curing temperature of the fiber-reinforced plastic composite is similar to the initial curing temperature of the adhesive. Thus, when the fiber-reinforced plastic composite is deformed while being heated and pressed, it is possible to prevent the adhesive layer from being damaged.

When the initial curing temperature of the adhesive is less than 120 °C, the thermal curing process of the adhesive is started and ended prior to that of the fiber-reinforced plastic composite, thus causing a reduction in adhesive strength due to the deterioration, internal stress, or surface fracture of the adhesive. When the initial curing temperature of the adhesive is more than 160 °C, the adhesive may not be sufficiently cured after the thermal curing process of the fiber-reinforced plastic composite.

If the metal material and the fiber-reinforced plastic composite are attached using the adhesive, the shear strength (lap shear) of the metal material and the fiber-reinforced plastic composite may be 5 MPa or more, and particularly range from 7 MPa to 10 MPa. In this case, the shear strength may be measured according to ASTM D 1002.

The cooling block 300 may be made of a material such as a fiber-reinforced plastic composite, aluminum or steel, and be made of a fiber reinforced plastic (FRP) composite as an embodiment for realizing lightness.

The matrix resin combined with the reinforced fiber may be any one selected from a group consisting of thermoplastic resin, curable resin, and a mixture thereof.

The thermoplastic resin may be any one selected from a group consisting of polyethylene resin (PE), polypropylene resin (PP), polymethylpentene resin (PMP), polyvinyl chloride resin (PVC), polystyrene resin (PS), acrylonitrile/butadiene/styrene copolymer (ABS), polymethyl methacrylate resin (PMMA), polyamide resin (PA), polyethylene terephthalate resin (PET), polybutylene terephthalate resin (PBT), polycarbonate resin (PC), modified polyphenylene ether resin (modified PPE), polyether sulfone resin (PES), polyimide resin (PI), polyetherimide resin (PEI), polyether nitrile resin (PEN), polyacetal resin (POM), polyphenylene sulfide resin (PPS), polyether ketone resin (PEK), polyether ether ketone resin (PEEK), polyphenyl sulfone resin (PPSU), polyphthalamide resin (PPA), and a mixture thereof.

The curable resin may be any one selected from a group consisting of thermosetting resin, photocurable resin (e.g. ultraviolet curable resin), moisture curable resin, and a mixture thereof.

The thermosetting resin exhibits fluidity at room temperature, and is not limited to specific resin as long as it is curable when being heated. For example, the thermosetting resin may be any one selected from a group consisting of polyurethane resin, unsaturated polyester resin, phenol resin, urea resin, epoxy resin, vinyl ester resin, melamine resin, acryl resin, polybutadiene resin, silicon resin, and a mixture thereof.

The photocurable resin may use a composition including a radical polymerizable component, a photo radical polymerization initiator, a cationic polymerizable component, and a photo cationic polymerization initiator.

The moisture curable resin may include urethane resin, silicon resin containing an alkoxide group, etc. As an example of the moisture curable resin, a urethane polymer containing an isocyanate group at the end of a molecule may be used as the main component, and the isocyanate group may react with water to form a cross-linked structure.

Furthermore, the matrix resin may contain various additives which are generally mixed with resin, such as a flame retardant, a coupling agent, a conductivity imparting agent, an inorganic filler, an ultraviolet absorber, an antioxidant, dye, and pigment.

The flame retardant may use a bromine flame retardant. Examples of the bromine flame retardant may include decabromodiphenyl ether, tetrabromo bisphenol A, tetrabromo bisphenol S, 1,2-bis(2',3',4',5',6'-pentabromophenyl)ethane, 1,2-bis(2,4,6-triblomophenoxy)ethane, 2,4,6-tris(2,4,6-bromophenoxy)-1,3,5-triazine, 2,6-dibromophenol, 2,4-dibromophenol, bromine polystyrene, ethylene bistetrabromophthalic acid imide, hexabromo cyclododecane, hexabromo benzene, pentabromo benzyl acrylate, 2,2-bis[4'(2',3"-dibromopropoxy)-3',5'-dibromophenyl]-propane, bis(3,5-dibromo, 4-bromorpropoxy phenyl)sulfone, tris(2,3-dibromopropyl)isocyanurate, etc.

The bromine flame retardant may be contained in the amount of 0.4 to 25 parts by weight, and particularly 5 to 15 parts by weight, on the basis of 100 parts by weight of the matrix resin. When the content of the bromine flame retardant is less than 0.4 parts by weight, combustion time tends to be longer. When the content of the bromine flame retardant is more than 25 parts by weight, the specific gravity of a molded product may be increased or the flame retardant may flow out of a surface of the molded product.

Furthermore, the flame retardant may use an antimony flame retardant. Examples of the antimony flame retardant may include antimony trioxide, antimony tetraoxide, antimony penta-oxide, sodium pyroantimonate, antimony trichloride, antimony trisulfide, antimony oxychloride or potassium antimonite.

The antimony flame retardant may be contained in the amount of 0.2 to 12.5 parts by weight, and particularly 1 to 3 parts by weight, on the basis of 100 parts by weight of the matrix resin. When the content of the antimony flame retardant is less than 0.2 parts by weight, combustion time tends to be longer. When the content of the antimony flame retardant is more than 12.5 parts by weight, the specific gravity of the fiber-reinforced plastic composite may be increased.

Furthermore, the flame retardant may further include aluminum hydroxide. In this case, the aluminum hydroxide may be contained in the amount of 5 to 20 parts by weight, on the basis of 100 parts by weight of the matrix resin. The aluminum hydroxide is not volatilized by heat but is decomposed to release water and non-flammable gas. It cools the fiber-reinforced plastic composite through endothermic reaction on the surface of the fiber-reinforced plastic composite, and plays a role in reducing the production of a pyrolysate.

The flame retardant may be added to a mixture including reinforced fiber and matrix resin, or be added after prepreg is formed.

The reinforced fiber may be any one selected from a group consisting of glass fiber, carbon fiber, graphite fiber, synthetic organic fiber, high modulus organic fiber, e.g. para-aramid fiber or meta-aramid fiber, nylon fiber, polypropylene fiber, polyethylene fiber, polyethylene terephthalate fiber, polybutylene terephthalate fiber, or polyester fiber, natural fiber, e.g. hemp, jute, flax, coir, kenaf or cellulose fiber, mineral fiber, e.g. basalt, mineral wool (e.g. rock wool or slag wool), wollastonite, alumina or silica, metal fiber, metal-treated natural fiber or synthetic fiber, ceramic fiber, yarn fiber, and a mixture thereof.

For instance, a sheet produced by combining the matrix resin and the reinforced fiber may be in the shape of a first sheet including the matrix resin and the long fiber as the reinforced fiber. The first sheet is configured such that the long fiber is dispersed in the matrix resin.

The first sheet includes long fiber which is superior in flowability and formability to the continuous fiber, thus exhibiting excellent processability when the fiber-reinforced plastic composite is manufactured. The long fiber means fiber that is shorter in length than continuous fiber and is cut to a predetermined length.

The first sheet may include 20 to 70 parts by weight, and particularly 40 to 50 parts by weight of long fiber, on the basis of 100 parts by weight of the matrix resin. The basis weight of the long fiber may range from 1500 g/m² to 3500 g/m². When the content of the long fiber is less than 20 parts by weight, it is difficult to expect the mechanical strength of the fiber-reinforced plastic composite. When the content is more than 70 parts by weight, the content of the long fiber is increased, so that it is difficult to realize the lightness of the fiber-reinforced plastic composite, and formability may be reduced.

The long fiber may have the average length of 10 mm to 30 mm, and particularly 10 mm to 20 mm. When the average length of the long fiber is less than 10 mm, manufacturing cost may be reduced but mechanical properties may be deteriorated. In contrast, when the average length of the long fiber is more than 30 mm, it may be difficult for the fiber to be dispersed in the matrix resin, and formability may be deteriorated.

Furthermore, the section diameter of the long fiber may range from 5 *µ*m to 30 *µ*m. When the section diameter of the long fiber satisfies this range, it is possible to attain the mechanical strength and formability of the fiber-reinforced plastic composite.

By adjusting the average length, section diameter, and content of the long fiber, the first sheet may be made to the thickness of about 0.1 mm to 10 mm. In this range, it is possible to attain the excellent mechanical strength and formability and shock absorbing properties.

The first sheet may be made in the following method. First, the matrix resin is put into a compounding extruder, and the reinforced fiber pulled out from a plurality of roving type of yarn bunches is put into a middle part of the compounding extruder. Subsequently, the reinforced fiber is cut to a predetermined length, and simultaneously the cut fiber and the preheated matrix resin are mixed. Subsequently, a strand type of long fiber may be discharged, and then be compressed and formed in the mold to manufacture the first sheet.

According to another example, the sheet produced by combining the matrix resin and the reinforced fiber may be the shape of a second sheet including matrix resin and fabric woven by continuous fiber as the reinforced fiber.

The fabric woven by the continuous fiber may be, for example, twill fabric or plain fabric of continuous fiber, or NCF (Non Crimp Fabric).

The second sheet may include 20 to 70 parts by weight, and particularly 55 to 70 parts by weight of fabric woven by continuous fiber, on the basis of 100 parts by weight of the matrix resin. The basis weight of the fabric may range from 800 g/m² to 1100 g/m². When the content of the fabric woven by the continuous fiber is less than 20 parts by weight, the mechanical strength of the fiber-reinforced plastic composite may be reduced. When the content is more than 70 parts by weight, the content of the fabric woven by the continuous fiber is increased, so that it is difficult to realize the lightness of the fiber-reinforced plastic composite.

The continuous fiber refers to fiber that is not structurally cut and is continuously long, and means fiber that is not cut therein and is present in a continuous form depending on the entire size of the second sheet.

Each of single strands of continuous fiber may have the section diameter ranging from 1 *µ*m to 200 *µ*m, particularly 1 *µ*m to 50 *µ*m, more particularly 1 *µ*m to 30 *µ*m, and even more particularly 1 *µ*m to 20 *µ*m. Since the single strands of continuous fiber have the section diameter of this range, the strands may be arranged side by side with one ply to thirty plies while having orientation, the impregnation of the matrix resin may be easy in the process of manufacturing the second sheet, and the second sheet may be formed to a proper thickness.

By adjusting the content of the fabric woven by the continuous fiber, the second sheet may be made to the thickness of about 0.1 mm to 10 mm. In this range, it is possible to attain the excellent mechanical strength and formability and shock absorbing properties.

The second sheet may be made in the following method. For example, the matrix resin is put into the compounding extruder and then is melted at temperature which is equal to or higher than the melting temperature of the matrix resin. The fabric woven by the continuous fiber is conveyed from a roller into a mold. The matrix resin which is melted through the compounding extruder is put into the mold to impregnate the fabric woven by the continuous fiber.

Subsequently, this may be pressed and cut to a proper size, thus making the second sheet. To be more specific, by pressing it using a calendar process, it is possible to control the single orientation of the fabric woven by the continuous fiber and manufacture the second sheet having excellent surface properties.

According to another example, the fiber-reinforced plastic composite may include a lamination sheet produced by laminating a plurality of sheets.

The lamination sheet may be produced by continuously laminating a plurality of first sheets, continuously laminating a plurality of second sheets, alternately laminating the first and second sheets, laminating a plurality of first sheets which are continuously laminated and a plurality of second sheets which are laminated, and alternately laminating a plurality of first sheets which are continuously laminated and a plurality of second sheets which are continuously laminated.

As such, as the fiber-reinforced plastic composite includes the lamination sheet, there is little in the bending of fiber, so that strength may be increased in a fiber direction, and excellent structural strength and stiffness may be attained.

The lamination sheet may include one or more layers of any one sheet selected from a group consisting of the first sheet, the second sheet, and a combination thereof. For example, each may include 1 to 2000 layers.

Furthermore, the lamination sheet may include the first and second sheets in the lay-up ratio of 1 : 10 to 10 : 1, and particularly in the lay-up ratio of 1 : 3 to 3 : 1.

The term "lay-up ratio" refers to a ratio of the number of first sheets to the number of second sheets. For example, when the lamination sheet includes two layers of first sheets and three layers of second sheets, the lay-up ratio is 2 : 3, that is, 1 : 1.5. As such, by setting the number of the layers such that the first and seconds sheets have the lay-up ratio of 1 : 10 to 10 : 1, the impact resistance of an article to which the fiber-reinforced plastic composite is applied may be significantly improved, and uniform strength and stiffness may be attained in all directions of the article.

The fiber-reinforced plastic composite may have the heat conductivity of 0.02 W/(mK) to 0.07 W/(mK), and particularly the heat conductivity of 0.04 W/(mK) to 0.05 W/(mK). The heat conductivity of the fiber-reinforced plastic composite may be measured using a heat-conductivity measuring device that may measure the temperature of the opposite side of a heat source under insulation sealing conditions. As the fiber-reinforced plastic composite has low heat conductivity and excellent heat insulation properties, it is possible to attain sufficient heat insulation properties without including a separate insulation member. In this case, in order to attain the heat insulation properties, the thickness of the cooling block 300 of 2 mm to 5 mm may be sufficient.

A surface of the battery case 10 coming into contact with the battery module may have the heat conductivity of 100 W/(mK) or more, while a surface opposite to the surface coming into contact with the battery module may have the heat conductivity of 0.05 W/(mK) or less. To be more specific, when the uneven cooling path 310 is formed on the top surface of the cooling block 300 and the heat dissipation plate 200 is coupled between the inner frame 100 and the cooling block 300, the heat conductivity from the cooling path 310 through the heat dissipation plate 200 may be 100 W/(mK) or more, and the heat conductivity from the cooling path 310 through the cooling block 300 may be 0.05 W/(mK) or less. Thereby, the battery case 10 may prevent heat from entering the bottom of the cooling block 300 without including a separate insulation member under the cooling block 300, and heat absorbed through the heat dissipation plate 200 may be effectively removed through the cooling path 310. The thermal conductivity may be measured using a HFM (Heat Flow Meter, particularly, EKO Instruments Trading Co. Ltd, Heat Flow Meter Instrument HC-074 model). The fiber-reinforced plastic composite may have the specific gravity of 1.4 g/cm³ to 2.2 g/cm³, and particularly the specific gravity of 1.6 g/cm³ to 2.0 g/cm³. The specific gravity of the fiber-reinforced plastic composite may be measured by the method of ASTM D792 under isothermal conditions. When the specific gravity of the fiber-reinforced plastic composite is in this range, the battery case 10 may obtain the lightness effect of about 15 wt% or more compared to the existing battery case of the aluminum material.

The fiber-reinforced plastic composite may have the falling weight impact strength of 5 J/mm to 20 J/mm, and particularly the falling weight impact strength of 10 J/mm to 15 J/mm. The falling weight impact strength of the fiber-reinforced plastic composite may be measured under the condition that the room temperature is 23 °C and the impact energy is 100 J, according to ASTM D3763. When the falling weight impact strength of the fiber-reinforced plastic composite is less than 5 J/mm, the battery may be damaged due to external shocks. When the falling weight impact strength is more than 20 J/mm, lightness effect may be deteriorated due to the reinforcement of the excessive material properties.

The fiber-reinforced plastic composite may have the tensile strength of 100 MPa to 400 MPa, the tensile stiffness of 10 GPa to 30 GPa, and the tensile elongation of 1 % to 4 %. The tensile strength, tensile stiffness, and tensile elongation of the fiber-reinforced plastic composite may be measured under the condition of 2 mm/min according to ASTM D3039 standard. When the tensile strength, tensile stiffness, and elongation of the fiber-reinforced plastic composite are out of the minimum range, the structural safety of the battery case 10 may be deteriorated by vehicle collision and external load.

The fiber-reinforced plastic composite may have the bending strength of 200 MPa to 500 MPa, the bending stiffness of 10 GPa to 30 GPa, and the bending elongation of 2 % to 4 %. The bending strength, bending stiffness, and bending elongation of the fiber-reinforced plastic composite may be measured using an Instron universal tester according to ASTM D-790 standard under the condition of 5 mm/min and 16:1 span length ratio. When the bending strength, bending stiffness, and bending elongation of the fiber-reinforced plastic composite are out of the minimum range, collision safety, structural sagging, and pressure in the path may cause a structure to expand and reduce a natural frequency.

The lower protective plate 500 may be made of a material such as a fiber-reinforced plastic composite, aluminum or steel, and be made of a fiber reinforced plastic (FRP) composite as an embodiment for realizing lightness.

According to an example, the fiber reinforced plastic (FRP) composite of the lower protective plate 500 may be a lamination sheet including at least one first sheet and at least one second sheet.

The first sheet includes the matrix resin and the long fiber as the reinforced fiber. The first sheet is configured such that the long fiber is dispersed in the matrix resin.

The first sheet includes long fiber which is superior in flowability and formability to the continuous fiber, thus exhibiting excellent processability when the fiber-reinforced plastic composite is manufactured. The long fiber means fiber that is shorter in length than continuous fiber and is cut to a predetermined length.

The first sheet may include 20 to 70 parts by weight, and particularly 40 to 50 parts by weight of long fiber, on the basis of 100 parts by weight of the matrix resin. The basis weight of the long fiber may range from 1500 g/m² to 3500 g/m². When the content of the long fiber is less than 20 parts by weight, it is difficult to expect the mechanical strength of the fiber-reinforced plastic composite. When the content is more than 70 parts by weight, the content of the long fiber is increased, so that it is difficult to realize the lightness of the fiber-reinforced plastic composite, and formability may be reduced.

The long fiber may have the average length of 10 mm to 30 mm, and particularly 10 mm to 20 mm. When the average length of the long fiber is less than 10 mm, manufacturing cost may be reduced but mechanical properties may be deteriorated. In contrast, when the average length of the long fiber is more than 30 mm, it may be difficult for the fiber to be dispersed in the matrix resin, and formability may be deteriorated.

Furthermore, the section diameter of the long fiber may range from 5 *µ*m to 30 *µ*m. When the section diameter of the long fiber satisfies this range, it is possible to attain the mechanical strength and formability of the fiber-reinforced plastic composite.

By adjusting the average length, section diameter, and content of the long fiber, the first sheet may be made to the thickness of about 0.1 mm to 10 mm. In this range, it is possible to attain the excellent mechanical strength and formability and shock absorbing properties.

The first sheet may be made in the following method. First, the matrix resin is put into a compounding extruder, and the reinforced fiber pulled out from a plurality of roving type of yarn bunches is put into a middle part of the compounding extruder. Subsequently, the reinforced fiber is cut to a predetermined length, and simultaneously the cut fiber and the preheated matrix resin are mixed. Subsequently, a strand type of long fiber may be discharged, and then be compressed and formed in the mold to manufacture the first sheet.

The second sheet includes matrix resin and fabric woven by continuous fiber as the reinforced fiber.

The fabric woven by the continuous fiber may be, for example, twill fabric or plain fabric of continuous fiber, or NCF (Non Crimp Fabric).

The second sheet may include 20 to 70 parts by weight, and particularly 55 to 70 parts by weight of fabric woven by continuous fiber, on the basis of 100 parts by weight of the matrix resin. The basis weight of the fabric may range from 800 g/m² to 1100 g/m². When the content of the fabric woven by the continuous fiber is less than 20 parts by weight, the mechanical strength of the fiber-reinforced plastic composite may be reduced. When the content is more than 70 parts by weight, the content of the fabric woven by the continuous fiber is increased, so that it is difficult to realize the lightness of the fiber-reinforced plastic composite.

The continuous fiber refers to fiber that is not structurally cut and is continuously long, and means fiber that is not cut therein and is present in a continuous form depending on the entire size of the second sheet.

Each of single strands of continuous fiber may have the section diameter ranging from 1 *µ*m to 200 µm, particularly 1 *µ*m to 50 *µ*m, more particularly 1 *µ*m to 30 *µ*m, and even more particularly 1 *µ*m to 20 *µ*m. Since the single strands of continuous fiber have the section diameter of this range, the strands may be arranged side by side with one ply to thirty plies while having orientation, the impregnation of the matrix resin may be easy in the process of manufacturing the second sheet, and the second sheet may be formed to a proper thickness.

By adjusting the content of the fabric woven by the continuous fiber, the second sheet may be made to the thickness of about 0.1 mm to 10 mm. In this range, it is possible to attain the excellent mechanical strength and formability and shock absorbing properties.

The second sheet may be made in the following method. For example, the matrix resin is put into the compounding extruder and then is melted at temperature which is equal to or higher than the melting temperature of the matrix resin. The fabric woven by the continuous fiber is conveyed from a roller into a mold. The matrix resin which is melted through the compounding extruder is put into the mold to impregnate the fabric woven by the continuous fiber.

Subsequently, this may be pressed and cut to a proper size, thus making the second sheet. To be more specific, by pressing it using a calendar process, it is possible to control the single orientation of the fabric woven by the continuous fiber and manufacture the second sheet having excellent surface properties.

The lamination sheet may be produced by alternately laminating the first and second sheets, laminating a plurality of first sheets which are continuously laminated and a plurality of second sheets which are continuously laminated, and alternately laminating a plurality of first sheets which are continuously laminated and a plurality of second sheets which are continuously laminated. Preferably, the second sheet is laminated to be disposed on a side to which impact is applied, i.e. a side requiring higher strength.

As such, as the fiber-reinforced plastic composite includes the lamination sheet, there is little in the bending of fiber, so that strength may be increased in a reinforced fiber direction, and excellent structural strength and stiffness may be attained.

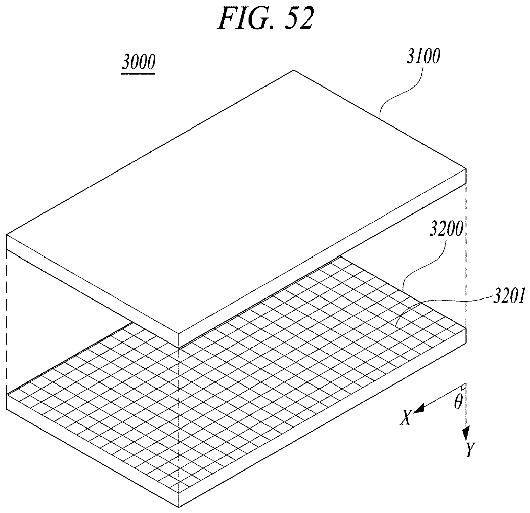

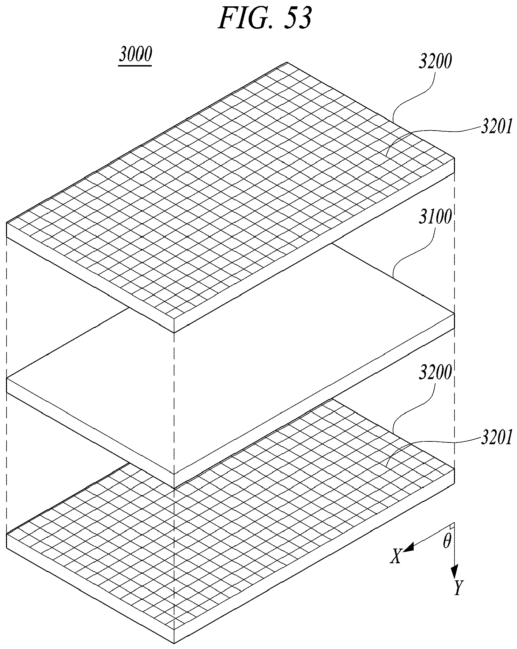

FIGS. 52 and 53 are exploded perspective views showing a fiber-reinforced plastic composite including a lamination sheet.

Referring to FIG. 52, a fiber-reinforced plastic composite 3000 includes a first sheet 3100 and a second sheet 3200 which are laminated. Although FIG. 52 illustrates that the second sheet 3200 includes fabric 3201 woven by continuous fiber as reinforced fiber, the fabric 3201 may not be exposed to the surface of the second sheet 3200.

Furthermore, although FIG. 52 illustrates that one first sheet 3100 and one second sheet 3200 are present, the present disclosure is not limited thereto. A plurality of first sheets 3100 and a plurality of second sheets 3200 may be laminated.

For example, the lamination sheet may include the first sheet and the second sheet each having one or more layers. For example, each of the first and second sheets may include 1 to 2000 layers.

Referring to FIG. 53, the fiber-reinforced plastic composite 3000 includes two seconds sheets 3200, and a first sheet 3100 interposed therebetween. However, the present disclosure is not limited thereto. The second sheet 3200 may be interposed between two first sheets 3100.

Furthermore, the lamination sheet may include the first and second sheets in the lay-up ratio of 1 : 10 to 10 : 1, and particularly in the lay-up ratio of 1 : 3 to 3 : 1.

The term "lay-up ratio" refers to a ratio of the number of first sheets to the number of second sheets. For example, when the lamination sheet includes two layers of first sheets and three layers of second sheets, the lay-up ratio is 2 : 3, that is, 1 : 1.5. As such, by setting the number of the layers such that the first and seconds sheets have the lay-up ratio of 1 : 10 to 10 : 1, the impact resistance of an article to which the fiber-reinforced plastic composite is applied may be significantly improved, and uniform strength and stiffness may be attained in all directions of the article.

Even in this case, the cooling block 300 and the lower protective plate 500 may be integrated with each other. In this case, the cooling block 300 and the lower protective plate 500 integrated with each other may be made of a lamination sheet including at least one first sheet and at least one second sheet, or be made of at least one first sheet corresponding to the cooling block 300 and a lamination sheet corresponding to the lower protective plate 500.

According to another example, the second sheet may include at least one 2-1 sheet and at least one 2-2 sheet having different fabric orientation angles.

The expression "fabric has orientation in any one direction in the second sheet" means that single strands of the continuous fiber in the fabric are arranged in any one direction. Since the fabric is usually manufactured by interweaving weft and warp arranged in different directions, the orientation direction of the fabric is based on only either the weft or the warp. Furthermore, it should be understood that the expression "having orientation in any direction" includes a case where an angle between two certain continuous fibers is 10 degrees or less, and particularly 5 degrees or less, a case where the fibers are completely parallel to each other, and a case where there is an error range which is difficult to discern when viewed with the naked eyes.

To be more specific, the fabric of the 2-1 sheet may have orientation in a first direction, the fabric of the 2-2 sheet may have orientation in a second direction, and the orientation angle between the first direction and the second direction may have an acute angle, be more than 0 degree and less than 90 degrees, particularly range from 10 to 80 degrees, more particularly range from 15 to 75 degrees, and even more particularly range from 30 to 60 degrees.

When at least one 2-1 sheet and at least one 2-2 sheet having different fabric orientation angles are laminated, strength and stiffness are secured while realizing enhanced elongation and energy absorbing performance.

The second sheet may be produced by alternately laminating the 2-1 sheet and the 2-2 sheet, laminating a plurality of 2-1 sheets which are continuously laminated and a plurality of 2-2 sheets which are continuously laminated, and alternately laminating a plurality of 2-1 sheets which are continuously laminated and a plurality of 2-2 sheets which are continuously laminated.

Even in this case, the cooling block 300 and the lower protective plate 500 may be integrated with each other. In this case, the cooling block 300 and the lower protective plate 500 integrated with each other may be made of a lamination sheet including at least one first sheet and at least one second sheet, or be made of at least one first sheet corresponding to the cooling block 300 and a lamination sheet corresponding to the lower protective plate 500.

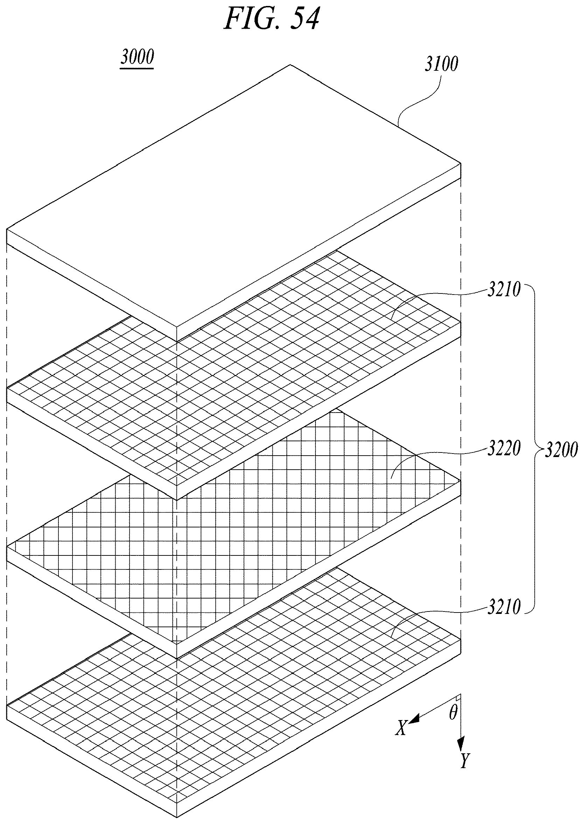

FIG. 54 is an exploded perspective view showing a case where a second sheet includes at least one 2-1 sheet and at least one 2-2 sheet having different fabric orientation angles.

Referring to FIG. 54, the fiber-reinforced plastic composite 3000 includes a first sheet 3100 and a second sheet 3200 which are laminated, and the second sheet 3200 includes a 2-1 sheet 3210 and a 2-2sheet 3220 having different fabric orientation angles.

The 2-1 sheet 3210 has the orientation in a first direction X, the 2-2 sheet 3220 has the orientation in a second direction Y, and an angle between the first direction X and the second direction Y has the orientation angle of about 45 degrees.

Furthermore, FIG. 54 illustrates that the second sheet 3200 includes two 2-1 sheets 3210 and a 2-2 sheet 3220 interposed therebetween. However, the present disclosure is not limited thereto. A 2-1 sheet 3210 may be interposed between two 2-2 sheets 3220.

Although FIG. 54 illustrates that one 2-1 sheet 3210 and one 2-2 sheet 3220 are alternately laminated, the present disclosure is not limited thereto. A plurality of 2-1 sheets 3210 and a plurality of 2-2 sheets 3220 are continuously laminated, they may be alternately laminated.

### MODE FOR INVENTION

### [Manufacture Example 1: Manufacture of Fiber-Reinforced Plastic composite 1]

### (Manufacture Example 1-1)

A 3 mm-thick first sheet containing 35 parts by weight of glass fiber in the form of long fiber (average length of 1 inch, section diameter of 20 *µ*m) on the basis of 100 parts by weight of unsaturated polypropylene resin was manufactured.

### (Manufacture Example 1-2)

A 3 mm-thick second sheet containing 35 parts by weight of plain fabric of glass fiber (section diameter of 20 *µ*m) on the basis of 100 parts by weight of unsaturated polypropylene resin was manufactured.

### (Manufacture Example 1-3-1)

A 2 mm-thick first sheet containing 35 parts by weight of glass fiber in the form of long fiber (average length of 1 inch, section diameter of 20 *µ*m) on the basis of 100 parts by weight of unsaturated polypropylene resin was manufactured.

Furthermore, a 1 mm-thick second sheet containing 35 parts by weight of plain fabric of glass fiber (section diameter of 20 *µ*m) on the basis of 100 parts by weight of unsaturated polypropylene resin was manufactured.

After the second sheet was laminated on the first sheet, they were joined by applying the pressure of 7 ton at the temperature of 220 °C.

### (Manufacture Example 1-3-2)

It was performed in the same manner as Manufacture Example 1-3-2, except that the first sheet was laminated on the second sheet and then they were joined.

### (Manufacture Example 1-4)

A 2 mm-thick first sheet containing 35 parts by weight of glass fiber in the form of long fiber (average length of 1 inch, section diameter of 20 *µ*m) on the basis of 100 parts by weight of unsaturated polypropylene resin was manufactured.

Furthermore, two 0.5 mm-thick second sheets containing 35 parts by weight of plain fabric of glass fiber (section diameter of 20 *µ*m) on the basis of 100 parts by weight of unsaturated polypropylene resin was manufactured.

After the two second sheets were laminated on the first sheet, they were joined by applying the pressure of 7 ton at the temperature of 220 °C.

### [Experimental Example 1: Properties Measurement of Fiber-Reinforced Plastic Composite 1]

The specific gravity, falling weight impact strength, tensile properties, and bending properties of the fiber-reinforced plastic composite manufactured in Manufacture Example 1-1 to Manufacture Example 1-4 were measured, and the results were shown in Table 1 below.
1) Falling Weight Impact Strength (High/Speed Puncture Energy, J/mm): the falling weight impact strength was measured under the conditions that room temperature was 23 °C and impact energy was 100 J, according to ASTM D3763. It was measured by vertically dropping a falling weight from the top of the manufactured fiber-reinforced plastic composite and converting crack generation energy from a crack generation height.
2) Tensile Properties: They were measured under the condition of 2 mm/min, according to ASTM D3039 standard.
3) Bending Properties: They were measured using the Instron universal tester according to ASTM D-790 standard under the condition of 5 mm/min and 16:1 span length ratio.

**Table 1**

| | | Manufacture Example1-1 | Manufacture Example1-2 | Manufacture Example1-3-1 | Manufacture Example1-3-2 | Manufacture Example1-4 |
|---|---|---|---|---|---|---|
| Specific Gravity | | 1.65 | 1.93 | 1.73 | 1.76 | 1.72 |
| Falling weight impact strength (J/mm) | | 6.9 | 10.3 | 7.4 | 8.7 | 7.0 |
| Tension | Strength (MPa) | 152 | 283 | 186 | 186 | 170 |
| | Stiffness (GPa) | 12.0 | 19.1 | 14.5 | 14.5 | 13.1 |
| | Elongation (%) | 1.64 | 2.07 | 1.72 | 1.72 | 1.67 |
| Bending | Strength (MPa) | 257 | 439 | 265 | 381 | 341 |
| | Stiffness (GPa) | 11.5 | 22.6 | 14.5 | 15.3 | 19.4 |
| | Elongation (%) | 2.97 | 2.43 | 2.41 | 3.41 | 2.15 |

Referring to Table 1, it can be seen that the fiber-reinforced plastic composite manufactured in Manufacture Example 1-1 is characterized by a high degree of freedom in molding, the fiber-reinforced plastic composite manufactured in Manufacture Example 1-2 has high stiffness and improved collision performance, the fiber-reinforced plastic composites manufactured in Manufacture Example 1-3-1 and Manufacture Example 1-3-2 has a high degree of freedom in molding and improved collision performance, and the fiber-reinforced plastic composite manufactured in Manufacture Example 1-4 may have improved cost competitiveness while enhancing collision performance.

### [Manufacture Example 2: Manufacture of Fiber-Reinforced Plastic Composite 2]

### (Manufacture Example 2-1)

Six 0.5 mm-thick second sheets containing 35 parts by weight of plain fabric of glass fiber (section diameter of 20 *µ*m) on the basis of 100 parts by weight of unsaturated polypropylene resin was manufactured.

The second sheets were laminated and joined. After a laminate was manufactured such that 2-1 sheets A arranged to cause fabric including second sheets to have orientation in the first direction (0 degree) have the structure of A/A/A/A/A/A, the second sheets were joined by applying the pressure of 7 ton at the temperature of 220 °C.

### (Manufacture Example 2-2)

Six 0.5 mm-thick second sheets containing 35 parts by weight of plain fabric of glass fiber (section diameter of 20 µm) on the basis of 100 parts by weight of unsaturated polypropylene resin was manufactured.

The second sheets were laminated and joined. After a laminate was manufactured such that 2-1 sheets A arranged to cause fabric including second sheets to have orientation in the first direction (0 degree) and 2-2 sheets B arranged to cause fabric including second sheets to have orientation in the second direction (45 degree) have the structure of A/A/B/B/A/A, the second sheets were joined by applying the pressure of 7 ton at the temperature of 220 °C.

### [Experimental Example 2: Properties Measurement of Fiber-Reinforced Plastic Composite 2]

The specific gravity and falling weight impact strength of the fiber-reinforced plastic composite manufactured in Manufacture Example 2-1 and Manufacture Example 2-2 were measured, and the results were shown in Table 2 below.
1) Falling Weight Impact Strength (High/Speed Puncture Energy, J/mm): the falling weight impact strength was measured under the conditions that room temperature was 23 °C and impact energy was 100 J, according to ASTM D3763. It was measured by vertically dropping a falling weight from the top of the manufactured fiber-reinforced plastic composite and converting crack generation energy from a crack generation height.

**Table 2**

| | Manufacture Example 2-1 | Manufacture Example 2-2 |
|---|---|---|
| Fabric lamination pattern | A/A/A/A/A/A | A/A/B/B/A/A |
| Specific gravity | 1.77 | 1.77 |
| Falling weight impact strength (J/mm) | 11.4 | 18.3 |

Referring to Table 2, it can be seen that the falling weight impact strength of Manufacture Example 2-2 is improved by about 61 %, compared to that of Manufacture Example 2-1.

### [Manufacture Example 3: Manufacture of Battery Case]

### (Comparative Example 1)

A lower protective plate of an aluminum material, a support part of an aluminum material, and a heat dissipation plate of an aluminum material were prepared, lamination was performed in the order of the lower protective plate, the support part, and the heat dissipation plate, an insulating plate was interposed between the lower protective plate and the support part, and then the components were coupled by welding. Although the support part had an uneven cooling path on the top surface thereof, a sidewall extending upwards from the edge portion thereof had no cooling path.

The inner and outer frames of the aluminum material were welded on the heat dissipation plate. The outer frame included sidewalls extending upwards from the edge portion thereof, and front, rear, left, and right sidewalls were connected to each other to be closed on all sides.

### (Embodiment 1)

A support part and a lower protective plate were manufactured by an extrusion-compression molding method using the fiber-reinforced plastic composite manufactured in Manufacture Example 1-3-2. In this case, uneven cooling paths were formed on a sidewall extending upwards from an edge portion and the top surface of the support when the support part was molded.

A heat dissipation plate of an aluminum material was prepared, lamination was performed in the order of the lower protective plate, the support part, and the heat dissipation plate, and then the components were attached using an adhesive.

An inner frame of a steel material was coupled to the interior of the sidewall of the support part using the adhesive. The inner frame was composed of first inner frames disposed inside the inner frame to extend in a left-and-right direction, second inner frames disposed on front and rear portions outside the inner frame to extend in the left-and-right direction, third inner frames disposed inside the inner frame to extend in a front-and-rear direction, and fourth inner frames disposed on left and right portions outside the inner frame to extend in the front-and-rear direction.

Furthermore, an outer frame of a steel material was coupled to an outer surface of the sidewall of the support part using the adhesive. The left and right sides, front portion, and rear portion of the outer frame were not connected to each other. The outer frame was composed of a first side frame, a second side frame, a rear frame, and a front frame. The outer fame included a horizontal rib horizontally extending inwards to support a part of the bottom of the support part.

### [Experimental Example 3: Properties Measurement of Battery Case]

For the battery case manufactured in Embodiment 1 and Comparative Example 1, a weight, the water-tightness of a cooling path, and compressive strength (front, side, and rear) were measured, and the results were shown in Table 3.
1) Water-tightness: in a state where an upper case was bound, the battery case was completely immersed in a water tank, and it was checked that there was no cooling leakage after two hours (GB/T 31467.3 standard).
2) Compressive strength (kN): the compressive strength was measured by a method where a compressive plate was placed on an opposite surface and then a load was applied thereto under the condition that one surface was fixed (Chinese GB/T 31467.3 standard).

**Table 3**

| | | Embodiment 1 | Comparative Example 1 |
|---|---|---|---|
| Weight (kg) | | 70 | 82 |
| Water-tightness | | No leakage | No leakage |
| Compressive Strength (kN) | Front | Standard Satisfied | Standard Satisfied |
| | Side | Standard Satisfied | Standard Satisfied |
| | Rear | Standard Satisfied | Standard Satisfied |

Referring to Table 3, it can be seen that the battery case manufactured in Embodiment 1 attained a weight reduction effect of about 15% compared to the battery case manufactured in Comparative Example 1, improved water-tightness, and had a similar level of compressive strength.

### [Manufacture Example 4: Manufacture of Integral Molded Product of Metal-Fiber Reinforced Plastic Composite using Adhesive]

### (Manufacture Example 4-1)

A metal specimen (5 cm wide and 10 cm long) of aluminum 60 series was loaded in a lower mold, an adhesive having the initial curing temperature of 90 °C on the basis of 130 °C and 2 minutes was laminated on the metal specimen, and a fiber-reinforced plastic composite manufactured in Manufacture Example 1-1 was laminated on the adhesive to cover 80% of the adhesive area, and then was molded at 130 °C for 2 minutes such that the thickness of the fiber-reinforced plastic composite became 2 mm.

### (Manufacture Example 4-2)

This was performed in the same manner as Manufacture Example 4-1, except that the adhesive having the initial curing temperature of 130 °C was used.

### (Manufacture Example 4-3)

This was performed in the same manner as Manufacture Example 4-1, except that the fiber-reinforced plastic composite was laminated to cover 100% of the adhesive area and then was molded.

### (Manufacture Example 4-4)

This was performed in the same manner as Manufacture Example 4-3, except that the adhesive having the initial curing temperature of 130 °C was used.

### (Manufacture Example 4-5)

The fiber-reinforced plastic composite manufactured in Manufacture Example 1-1 was put into the mold, and was molded at 130 °C for 2 minutes such that its thickness became 2 mm.

The molded fiber-reinforced plastic composite and the metal specimen (5 cm wide and 10 cm long) of aluminum 60 series were attached using the adhesive having the initial curing temperature of 90 °C on the basis of 130 °C and 2 minutes.

### [Experimental Example 4: Properties Measurement of Integral Molded Product of Metal-Fiber Reinforced Plastic Composite]

For samples manufactured in Manufacture Example 4-1 to Manufacture Example 4-5, adhesion, adhesive tearing, and adhesive pushing were measured, and the results were shown in Table 4.
1) Adhesion (MPa): the fiber-reinforced plastic composite was held by a jig, and the metal specimen was pulled under the condition of 2 mm/min according to ASTM D3039 standard, so that tensile strength was measured.
2) Adhesive Tearing: after the fiber-reinforced plastic composite and the metal specimen were separated from each other, an area having no adhesive was visually checked (a case where adhesive tearing occurred was marked by O, and a case where no adhesive tearing occurred was marked by X).
3) Adhesive Pushing: before the fiber-reinforced plastic composite and the metal specimen were separated from each other, it was visually checked whether the adhesive was out of the metal specimen (a case where adhesive pushing occurred was marked by O, and a case where no adhesive pushing occurred was marked by X).

**Table 4**

| | Manufacture Example 4-1 | Manufacture Example 4-2 | Manufacture Example 4-3 | Manufacture Example 4-4 | Manufacture Example 4-5 |
|---|---|---|---|---|---|
| Adhesion (MPa) | Bad | Excellent | Bad | Good | Good |
| Adhesive tearing | ○ | X | X | X | X |
| Adhesive pushing | X | X | ○ | ○ | X |

Referring to Table 4, when the initial curing temperature of the adhesive was in the range of -10 °C to +10 °C of the curing temperature of the fiber-reinforced plastic composite and the fiber-reinforced plastic composite was laminated to cover 60% to 100% of the adhesive area, it can be seen that adhesion between metal and fiber-reinforced plastic composite was excellent.

While the present disclosure has been particularly described with reference to exemplary embodiments shown in the drawings, it will be understood by those of ordinary skill in the art that the exemplary embodiments have been described for illustrative purposes, and various changes and modifications may be made without departing from the spirit and scope of the present disclosure as defined by the appended claims.

### [Detailed Description of Main Elements]

| | | | |
|---|---|---|---|
| 10: | battery case | 30: | support part |
| 50: | lower mold | 60: | upper mold |
| 100: | inner frame | | |
| 110: | first inner frame | 112: | first inner protruding frame |
| 113: | coupling-member through hole | 114: | first inner supporting frame |
| 116: | mounting coupling part | 120: | second inner frame |
| 122: | second inner upper frame | 124: | second inner lower frame |
| 130: | third inner frame | 140: | fourth inner frame |
| 150: | fastening hole | | |
| 200: | heat dissipation plate | 240: | unformed part |
| 250: | fastening hole | | |
| 300: | cooling block | 310: | cooling path |
| 320: | first path partition wall | 330: | second path partition wall |
| 340: | spacer | 350: | fastening hole |
| 360: | sidewall | 370: | stepped part |
| 378: | perforation | | |
| 400: | outer frame | 410: | first side frame |
| 420: | second side frame | 430: | rear frame |
| 440: | front frame | 450: | horizontal rib |
| 500: | lower protective plate | 540: | protruding support part |
| 550: | fastening hole | 600: | adhesive |
| 700: | fastening member | 710: | bolt |
| 720: | nut | 730: | coupling member (SPR) |
| 1000: | battery case | 1100: | support part |
| 1110: | battery-module seat part | 1200: | inner frame |
| 1210: | inner external frame | 1220: | inner internal frame |
| 1230: | inner frame body | 1240: | inner frame coupling body |
| 1241: | bolt coupling part | | |
| 1300: | outer frame | 1310: | outer lower support frame |
| 1311: | outer internal lower support frame | 1320: | outer side support frame |
| 1321: | outer internal side support frame | | |
| 1600: | adhesive | | |
| 2100: | upper case | | |
| 2200: | battery module | 2300: | lower case |
| 2310: | battery-module seat part | 2320: | frame part |
| 2321a: | cooling path | 2321b: | space |
| 2321: | body frame | 2322: | support frame |
| 2323: | extension frame | 2323a: | lower-protective-plate coupling part |
| 2400: | lower protective plate | 2410: | plate part |
| 2411: | extension coupling part | 2411a: | lower-case coupling part |
| 2412: | mounting coupling part | 2420: | protruding support part |
| 2500: | coupling member | 2510: | bolt |
| 2520: | nut | | |
| 3000: | fiber-reinforced plastic composite | | |
| 3100: | first sheet | 3200: | second sheet |
| 3201: | fabric | | |
| 3210: | 2-1 sheet | 3220: | 2-2 sheet |

## Claims

1. A lower protecting plate of a battery module for an electric car, comprising:
a fiber-reinforced plastic composite (3000) formed of a lamination sheet comprising at least one of first and second sheets (3100, 3200);
wherein the first sheet (3100) comprises matrix resin and reinforced fiber in the form of long fiber, and
wherein the second sheet (3200) comprises matrix resin and reinforced fiber in the form of fabric woven by continuous fiber.

2. The lower protecting plate of claim 1, wherein the first sheet (3100) is composed of a plurality of sheets.

3. The lower protecting plate of claim 1, wherein the second sheet (3200) is composed of a plurality of sheets.

4. The lower protecting plate of claim 1,
wherein the first sheet (3100) comprises 20 to 70 parts by weight of the long fiber on the basis of 100 parts by weight of the matrix resin, and
wherein a basis weight of the long fiber ranges from 1500 g/m² to 3500 g/m².

5. The lower protecting plate of claim 1,
wherein the long fiber has an average length of 10 mm to 30 mm, and
wherein the long fiber has a section diameter of 5 *µ*m to 30 *µ*m.

6. The lower protecting plate of claim 1,
wherein the second sheet (3200) comprises 20 to 70 parts by weight of the fabric woven by continuous fiber on the basis of 100 parts by weight of the matrix resin, and
wherein a basis weight of the fabric ranges from 800 g/m² to 1100 g/m².

7. The lower protecting plate of claim 1, wherein the continuous fiber has a section diameter of 1 *µ*m to 200 *µ*m.

8. The lower protecting plate of claim 1, wherein the lamination sheet is provided by alternately laminating the first and second sheets (3100, 3200).

9. The lower protecting plate of claim 1, wherein the lamination sheet is provided by laminating a plurality of first sheets (3100) which are continuously laminated and a plurality of second sheets (3200) which are continuously laminated.

10. The lower protecting plate of claim 1, wherein the lamination sheet is provided by alternately laminating a plurality of first sheets (3100) which are continuously laminated and a plurality of second sheets (3200) which are continuously laminated.

11. The lower protecting plate of claim 1, wherein the lamination sheet comprises the first and second sheets (3100, 3200) in a lay-up ratio of 1 : 10 to 10 : 1.

12. The lower protecting plate of claim 1, wherein the second sheet (3200) comprises at least one 2-1 sheet (3210) and at least one 2-2 sheet (3220) having different fabric orientation angles.

13. The lower protecting plate of claim 12,
wherein a fabric of the 2-1 sheet (3210) has an orientation in a first direction,
wherein a fabric of the 2-2 sheet (3220) has an orientation in a second direction, and
wherein an orientation angle formed between the first direction and the second direction is more than 0 degree and less than 90 degrees.

14. The lower protecting plate of claim 12, wherein the second sheet (3200) is provided by alternately laminating the 2-1 sheet (3210) and the 2-2 sheet (3220), or
wherein the second sheet (3200) is provided by alternately laminating a plurality of 2-1 sheets (3210) which are continuously laminated and a plurality of 2-2 sheets (3220) which are continuously laminated.

15. The lower protecting plate of claim 12, wherein the second sheet (3200) is provided by laminating a plurality of 2-1 sheets (3210) which are continuously laminated and a plurality of 2-2 sheets (3220) which are continuously laminated.
